# EUROPEAN PATENT SPECIFICATION

(11) **EP 0 517 421 B1**
(45) Date of publication and mention of the grant of the patent: **11.09.1996**
(21) Application number: 92304813.6
(22) Date of filing: 28.05.1992
(51) Int. Cl.: F16H 61/02

(54) **Transmission start-up control**
Getriebe-Anfahrsteuerung
Commande de démarrage de transmission

(30) Priority: 03.06.1991 US 709629; 03.06.1991 US 710360; 03.06.1991 US 709188; 03.06.1991 US 709187; 03.06.1991 US 710363
(43) Date of publication of application: 09.12.1992
(60) Divisional application: 96200128.5
(73) Proprietor: NEW HOLLAND U.K. LIMITED, Basildon, Essex SS14 3AD (GB)
(72) Inventor: Churchill, Stephen J., New Holland, Pennsylvania 17557 (US); Pearce, Shairyl I., Lititz, Pennsylvania 17543 (US); Nielsen, Bradley A., New Holland, Pennsylvania 17557 (US); Rutkowski, David J., Grosse Ile, Michigan 48138 (US); Tanzer, John H., Troy, Michigan 48083 (US); Beim, Rudolph, Southfield, Michigan 48076 (US); Alderman, Bobby P., Lancaster, Pennsylvania 17601 (US); Williams, Everett C., Lititz, Pennsylvania 17543 (US); Sokol, David G., New Holland, Pennsylvania 17557 (US); Strosser, Richard P., Akron, Pennsylvania 17540 (US); Macqueene, James William, No. 306 Willowbrook, Illinois 60514 (US); Rempe, Scott A., Pella, Iowa 50219 (US); Longford, Michael E., New Holland, Pennsylvania 17557 (US)
(74) Representative: Vandenbroucke, Alberic

(56) References cited:
- EP-A- 0 083 856
- EP-A- 0 240 901
- GB-A- 2 090 926
- US-A- 4 591 035
- US-A- 4 650 048
- US-A- 4 989 470
- US-A- 5 012 416

## Description

### Related Applications

This application discloses subject matter also disclosed and claimed in the following concurrently filed and commonly owned applications and patents, the disclosures of which are incorporated herein by reference:
EP-A-0.517.420 entitled Transmission Speed Matching Control.
EP-A-0.517.422 entitled Creeper Gear Engagement/Disengagement
US-A-5.101.688 entitled Driveline Engagement/Disengagement

This invention relates to an improvement in off-road vehicle transmission systems of the type wherein gearshift levers are mechanically linked to couplers to select ranges of gears, and electro-hydraulic powershift clutches are provided to select one gear within a selected range. More specifically, the present invention provides an improvement in such transmissions to obtain a more uniform automatic selection of the effective gear at the time of start-up and/or when changing from one gear range to another.

In the transmission system described in the above-referenced applications, three operator controls are provided for gear selection. A High/Low range shift lever is mechanically linked to a first coupler and selects a first or a second range of gear speeds, each range including 8 gear speeds. A 4/5 range shift lever selects one of two sub-ranges within the range selected by the High/Low shift lever, each sub-range including 4 gear speeds. Finally, two powershift push-buttons are provided for controlling electro-hydraulic clutches to select one of four gear speeds within the range defined by the High/Low and 4/5 range select levers. A microprocessor senses the various operator controls and selects a specific powershift gear when the 4/5 shift lever is shifted. That is, powershift gear 4 is selected when the 4/5 shift lever is shifted from its high range position (5) to its low range position (4) and powershift gear 1 is selected when the shift lever is shifted from its low range position to its high range position.

It will be appreciated that in the described system the gear selected at start-up may vary widely depending on the positions of the range shift levers and the selected powershift gear. Even if the powershift gear selection is limited to the lowest powershift gear, the transmission at start-up could be in gear 1, 5, 9 or 13 depending on the positions of the range shift levers. However, it is desirable that the initial gear selection be as nearly constant as possible within the limits imposed by the positions of the shift levers. Furthermore, it is desirable that the transmission not be engaged until the operator has completed a sequence of actions indicating that he is anticipating engagement of the transmission.

An object of the present invention is to provide an improvement in off-road vehicle transmissions with powershifting, the improvement providing an automatic and more uniform gear selection at start-up and/or when changing from one gear range to another.

The present invention is defined in the appended claims and in accordance with the principles of one aspect of the invention, sensors are provided for sensing when the engine is running, a forward/reverse shift lever has been shifted from neutral, or a clutch pedal has been depressed, and whether the vehicle is moving or stationary. A microprocessor is responsive to the sensors for selecting a first or a second initial powershift gear speed depending on the positions of two range shift levers, the selection being such that the initial gear speed ratio selected is kept to a minimum consistent with the shift lever positions. The initial powershift gear selection is made only if the vehicle is not moving, and the electro-hydraulic powershift clutches are engaged only if the microprocessor senses a sequence of conditions comprising the engine running followed by either a shifting of the forward/reverse lever from neutral or a movement of the clutch pedal from a depressed position to a released position.

The invention may also provide a method and apparatus for selecting the initial powershift gear selected at start-up. When a first range select lever selects a high range of gears, the lowest powershift gear is automatically selected but if the range select lever selects a low range then the highest powershift gear is selected. When the first range select lever selects one of two ranges within each of two ranges selectable by a second range select lever, the position of the second lever determines the powershift gear selected at start-up.

When changing from one gear range to another, it is desirable to reduce the magnitude of speed changes during range shifting, reduce the possibility of sudden changes in speed, and reduce synchronizer wear.

Transmissions having both mechanically shifted couplers and powershift clutches are well known in the art. These transmissions can be designed to provide a wide range of gear speed ratios between the input and output shafts and are well adapted for use in off-road vehicles such as agricultural tractors. As already mentioned, the above-referenced applications disclose such a transmission having two range select levers which shift two synchronized couplers to select ranges of gears and two powershift control buttons for controlling electro-hydraulic clutches to select one of four gears within the selected range.

In a transmission having both mechanically shifted couplers and powershift clutches, a sudden acceleration or deceleration occurs when a range select lever is shifted from one range to another. For example, if a range select lever selects the gear range 1-4 in one position and gear range 5-8 in a second position, shifting of the range select lever results in a change of four gears, i.e. gear 1 to gear 5 or gear 2 to gear 6, etc., because the selected powershift gear does not change. If the second range select lever controls gear selection between the ranges 1-8 and 9-16, a shift of this lever produces a change of eight gears and the acceleration or deceleration is even greater. Such accelerations/decelerations are highly undesirable because they have a tiring effect on the operator, result in more wear on the transmission, particularly the coupler synchronizers, and reduce the ability to precisely control the vehicle speed.

In accordance with another aspect of the present invention, movement of a range shift lever controls powershift gear selection so that when the lever is moved from a low to a high range position the lowest powershift gear is selected and when the lever is moved from a high to a low range position the highest powershift gear is selected. This provides a smoother shift and reduces synchronizer wear.

In accordance with a still further aspect of the invention, synchronizer wear is further reduced by placing at least one electro-hydraulic powershift clutch between the transmission input shaft and the synchronized couplers and, as a clutch pedal is depressed in preparation for a range shift, releasing the fluid from the hydraulic clutch before the clutch pedal is fully depressed. This disconnects the input shaft prior to the time the synchronized shift is initiated. Thus, a lower shift effort is required and viscous drag of the transmission gears in the wet sump begins slowing rotation of the gears prior to the time the synchronized shift takes place.

Thus the various aspects of the present invention provide:-
(1) method and apparatus for controlling a transmission so as to reduce to a minimum the change in gear speed ratio when a range shift is made.
(2) method and apparatus for controlling powershift gear selection upon shifting of a coupler from one gear range to another, the lowest powershift gear being selected when the coupler is shifted from a low range to a high range and the highest powershift gear being selected when the coupler is shifted from the high range to the low range.
(3) method and apparatus as described above for use in a system having two shiftable couplers, the second coupler being shiftable between a first lower and second higher range. In this case, if one or both levers are shifted, the highest powershift gear is selected if the new lever position(s) will produce a lower gear range, and the lowest powershift gear is selected if the new lever position(s) will produce a higher gear range.
(4) a transmission system wherein at least one electro-hydraulic powershift clutch is located between the transmission input shaft and one or more synchronized couplers, and means responsive to movement of a clutch pedal are provided for releasing fluid from the powershift clutches as the clutch pedal is depressed but before it reaches a fully depressed position at which synchronized shifting takes place. When more than one powershift clutch is provided, the second powershift clutch is located between the synchronized coupler and the output shaft of the transmission.

In transmissions under discussion, it is desirable that they have a wide range of gear speed ratios. However, as the number of gear speeds increases, the operator controls become more complex. For example, in one transmission having 12 forward speeds, a range shift lever mechanically actuates clutches to select one of four gear speeds. A separate gearshift lever, movable in an H pattern, permits selection of one of three gear speeds in the selected range by actuating clutches via a mechanical linkage.

More recently, powershift transmissions have come into use. In these transmissions the operator shifts a shift lever selectively to actuate switches which control solenoid actuated valves, the valves in turn controlling application of hydraulic pressure to clutches. In one transmission of this type, a single shift lever permits selection of any gear speed within the range of available gear speeds.

Because of cost and other considerations, features of mechanically shifted (synchronized) transmissions have been combined with those of powershift transmissions. This has led to a wide variety of operator controls. In one prior art transmission, a shift lever, movable in an H pattern, provides synchronized selection of one of four gear speed ranges. In each of the four positions, the shift lever may be moved sidewise to permit powershifting to one of two powershift gear speeds within the selected range. This arrangement requires considerable thought by the operator to determine what action he must take in order to shift to a desired gear speed. Furthermore, it is limited to only two powershift gear speeds in each range.

In accordance with a preferred feature applicable to all aspects of the present invention, a transmission is provided with a range shift lever mechanically linked to a synchronized coupler in the transmission. Movement of the shift lever selects a first or a second range of gear speeds. One or more push-button switches are mounted on the range shift lever and extend from one side of the shift lever near its top so that an operator may operate the push-buttons with his thumb while still gripping the top of the shift lever with his palm and other fingers of the same hand. The push-button switches control powershift clutches to select higher or lower gear speeds within the selected range. In a preferred embodiment, N=4 powershift gear speeds are available in each range so that the operator may shift between 2N=8 gear speeds without removing his hand from the shift lever. Since only two ranges are selectable, the shift lever is constrained to move in a single plane. A visual display adjacent the shift lever selectively displays the numerals 1-8 and enables the operator to determine at a glance which one of eight gear speeds is in effect. If a second range shift lever is provided, a second display may also be provided, the second display being capable of displaying the numerals 1-8 together with an indication of the position of the second shift lever.

Other objects of the invention and its mode of operation will become apparent upon consideration of the following description and the accompanying drawings which are given by way of example, and in which :-
Fig. 1 is a schematic representation of a transmission and its controls;
Fig. 2 illustrates the operator controls for controlling the transmission;
Fig. 3 is a schematic wiring diagram illustrating inputs to and outputs from a microprocessor controlling the transmission;
Figs. 4A and 4B illustrate the Start-Up routine executed by the microprocessor;
Fig. 5 illustrates a routine for controlling the dump solenoid;
Fig. 6 illustrates a routine for controlling powershift gear selection;
Fig. 7 illustrates a routine for making an initial selection of a powershift gear;
Fig. 8 illustrates a routine for changing powershift gear selection in response to shifting of a range shift lever;
Fig. 9 illustrates a routine for engaging or disengaging a creeper gear, and
Fig. 10 illustrates a routine for changing powershift gear selection in response to the shifting of either one, or both, of two range shift levers.

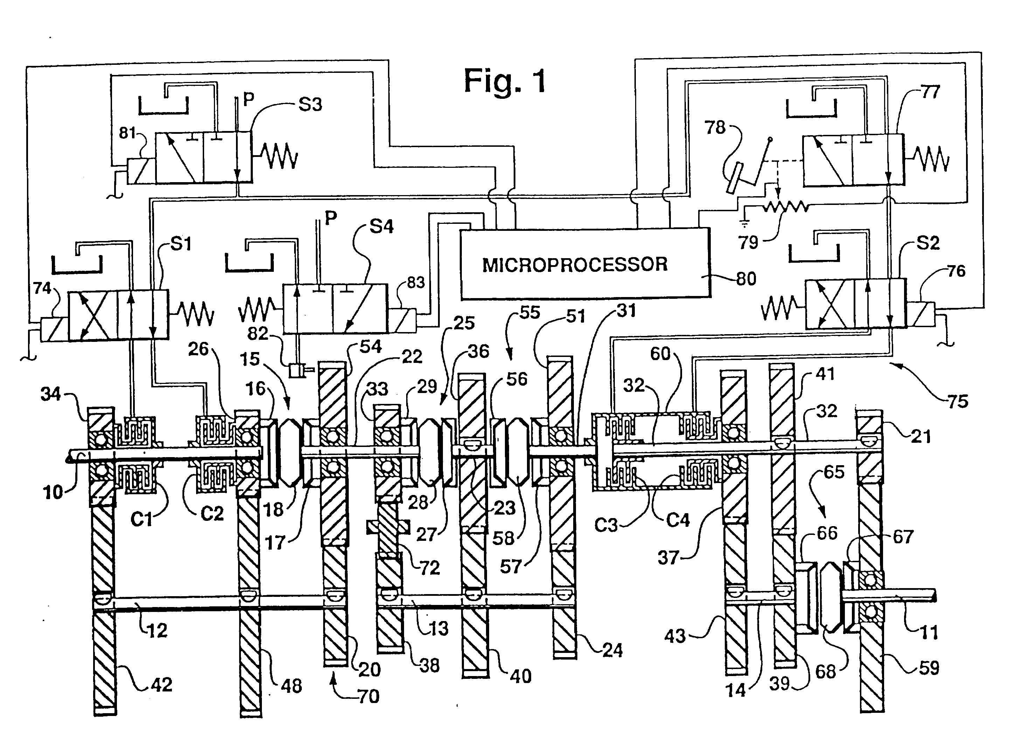

Fig. 1 is a schematic representation of a microprocessor controlled transmission system for transmitting torque from an input shaft 10 to an output shaft 11 at any one of 16 forward or 16 reverse gear speed ratios. The input shaft 10 receives rotational power directly from an engine (not shown) in a conventional manner. A first drive gear 34 is rotatably mounted on the input shaft 10 for rotation independently thereof. The first drive gear 34 is operatively connected with a first hydraulic clutch C1 mounted on the input shaft 10 such that engagement of the first clutch C1 couples the first drive gear 34 to the input shaft 10 for rotation therewith. Disengagement of the first clutch C1 allows the first drive gear 34 to rotate freely on the input shaft 10. Similarly, a second drive gear 26 is rotatably mounted on the input shaft 10 and operatively connected to a second hydraulic clutch C2 to permit a selective coupling of the second drive gear 26 to the input shaft 10 for rotation therewith upon engagement of the second clutch C2.

A first jack shaft 12 is rotatably supported in the transmission casing (not shown) in a parallel orientation to the input shaft 10. A first transfer gear 42 and a second transfer gear 48 are mounted on the first jack shaft 12 for rotation therewith. The first transfer gear 42 is meshed with the first drive gear 34 to be rotatable therewith, while the second transfer gear 48 is meshed with the second drive gear 26 to be rotatable therewith. A first drive member 16 of a coupler 15 is fixed to the second drive gear 26 to be rotatably driven therewith.

In operation, rotational power is transferred to the first drive member 16 of the coupler 15 from the engine (not shown) along one of two alternate drive paths, providing two speeds of rotation for a given engine output rotation of the input shaft 10. The first drive path provides the slower rotational speed by engagement of the second hydraulic clutch C2 to directly couple the second drive gear 26 to the input shaft 10. The second drive path involves a disengagement of the second clutch C2 and an engagement of the first hydraulic clutch C1 to couple the first drive gear 34 to the input shaft 10. Rotational power is transferred to the intermeshed first transfer gear 42 and to the second transfer gear 48, due to the fixed mounting thereof on the first jack shaft 12, and then to the second drive gear 26 which is rotatable relative to the input shaft 10 to drive the coupler drive member 16 at a faster speed than the speed obtained by directly coupling the second drive gear 26 to the input shaft 10.

The coupler 15 is an optional device associated with the provision of a "creeper" range. In the event a creeper mechanism 70 is not utilized, the shiftable power transfer member 18 of the coupler 15 is connected directly to the first drive member 16 of the coupler 15 to provide direct driving rotation of a first drive shaft portion 22 and a shiftable power transfer member 28 of a second (Forward/Reverse) coupler 25, which is preferably a synchronizing coupler. A reverse drive gear 33 is rotatably mounted on the first drive shaft portion 22 for rotation independently thereof, but is operatively associated with the second synchronizing coupler 25 to provide a selection by the operator between forward and reverse operation of the output shaft 11, as will be described in greater detail below. For purposes of describing the operation of the transmission, the power transfer member 28 of the second synchronizing coupler 25 is deemed to be engaged with the second drive member 27 to effect a direct coupling of the first drive shaft portion 22 with the second drive shaft portion 23 and, thereby effect a normal forward operative driving of the transmission.

The second drive shaft portion 23 is provided with a third drive gear 36 affixed thereto for rotation therewith. The third drive gear 36 is drivingly intermeshed with a third transfer gear 40 affixed to a second jack shaft 13 rotatably supported in the transmission casing (not shown) in a parallel orientation with the second drive shaft portion 23. A fourth transfer gear 24 is also fixed to the second jack shaft 13 for rotation with the third transfer gear 40. A fourth drive gear 51 is rotatably supported on a third drive shaft portion 31 for rotation independently thereof. The fourth drive gear 51 is intermeshed with the fourth transfer gear 24 for a driving relationship therebetween.

A third (4/5) coupler 55, preferably a synchronizing coupler, drivingly interconnects the second drive shaft portion 23 and the third drive shaft portion 31. A first drive member 56 of the synchronizing coupler 55 is connected to and associated with the second drive shaft portion 23, while a second drive member 57 of the coupler 55 is connected to and operatively associated with the fourth drive gear 51. A shiftable power transfer member 58 is connected to the third drive shaft portion 31 and is selectively engageable with either the first or second drive members 56, 57 of the third coupler 55 to effect a transfer of rotational power along a selected one of two alternate paths of rotational power.

Rotational power received by the third drive gear 36 from the driving connection between the first and second drive shaft portions 22, 23 can be transferred to the third drive shaft portion 31 via a first drive path defined by the interengagement of the shiftable power transfer member 58 and the first drive member 56 of the third synchronizing coupler 55 to directly couple the second and third drive shaft portions 23, 31. The alternate drive path is selected when the shiftable power transfer member 58 is selectively engaged with the second drive member 57 of the third coupler 55. Rotational power is transferred along this alternate drive path to the third drive shaft portion 31 from the third drive gear 36 to the third transfer gear 40, which due to the fixed relationship between the third transfer gear 40, the second jack shaft 13, and the fourth transfer gear 24, transfers rotational power to the fourth transfer gear 24 and then to the intermeshed fourth drive gear 51. Since the fourth drive gear 51 is drivingly coupled to the third drive shaft portion 31 via the engagement of the power transfer member 58 and the second drive member 57 of the third coupler 55, the third drive shaft portion 31 is rotated at a slower rotational speed via this alternate drive path for a given rotational speed of the second drive shaft portion 23 than the direct coupling of the second and third drive shaft portions 23, 31.

The third drive shaft portion 31 is connected to the housing or drive half of a clutch pack 60 housing two separate clutches, a third hydraulic clutch C3 and a fourth hydraulic clutch C4. The third clutch C3 is connected to a fourth drive shaft portion 32 such that the engagement of the third hydraulic clutch C3 drivingly couples the third and fourth drive shaft portions 31, 32. The fourth hydraulic clutch C4 is connected to a fifth drive gear 37 rotatably mounted on the fourth drive shaft portion 32 for rotation independently thereof, such that the engagement of the fourth hydraulic clutch C4 drivingly couples the third drive shaft portion 31 to the fifth drive gear 37. Obviously, the third and fourth clutches C3, C4 cannot be simultaneously actuated.

Accordingly, two additional alternate drive paths are provided through the selection afforded by the clutch pack 60. The first of these drive paths is the direct coupling of the third and fourth drive shaft portions 31, 32 through actuation of the third hydraulic clutch C3. The second of these alternate drive paths utilizes actuation of the fourth hydraulic clutch C4 to drivingly couple the third drive shaft portion 31 to the fifth drive gear 37, which transfers rotational power to a fifth transfer gear 43 intermeshed with the fifth drive gear 37 and affixed to a third jack shaft 14. A sixth transfer gear 39 is also affixed to the third jack shaft 14 for rotation coextensively with the fifth transfer gear 37. The sixth transfer gear 39 is meshed with a sixth drive gear 41 affixed to the fourth drive shaft portion 32 to effect rotation thereof when the fourth clutch C4 is actuated.

A fourth (High/Low Range) coupler 65, preferably a synchronizing coupler, provides a final pair of alternate drive paths for rotational power to be transferred to the output shaft 11. The fourth synchronizing coupler 65 includes a first drive member 66 connected to the sixth transfer gear 39 to be rotational with the fifth and sixth transfer gears 43, 39 and the third jack shaft 14, a second drive member 67 connected to and rotatably associated with a seventh transfer gear 59 rotatably mounted on the output shaft 11 to be rotatable independently thereof, and a shiftable power transfer member 68 connected to the output shaft 11 to be rotatable therewith.

A seventh drive gear 21 is also affixed to the fourth drive shaft portion 32 to be rotatable therewith and with the sixth drive gear 41. The first of these two final alternate paths of rotational power transfer is defined by a direct coupling of the shiftable power transfer member 68 to the first drive member 66 of the fourth coupler 65 to drivingly couple the rotation of the sixth transfer gear 39 to the output shaft 11. The final alternate drive path is defined by an engagement of the shiftable power transfer member 68 with the second drive member 67 of the fourth coupler 65 so that the output shaft 11 is driven from the seventh transfer gear 59 which is intermeshed with the seventh drive gear 21 receiving rotational power from the driven fourth drive shaft portion 32. Because of the relative sizes of the seventh drive and transfer gears 21, 59, the output shaft 11 is driven at a slower rotational speed for a given speed of rotation of the fourth drive shaft portion 32 when the output shaft 11 is coupled to the seventh transfer gear 59 rather than the sixth transfer gear 39, which may alternatively receive rotational power from either the driven sixth drive gear 41 or the fifth transfer gear 43 via the driven fifth drive gear 37.

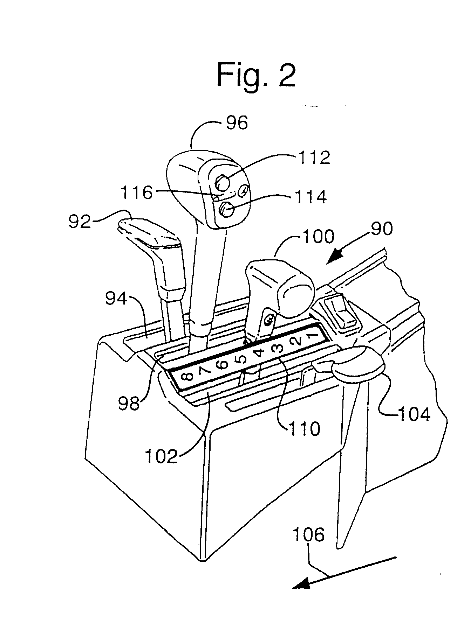

Referring to Fig. 2, the operator controls for the transmission are located on a console 90 positioned to the right of the operator as he sits in a seat (not shown) facing forwardly in the direction indicated by arrow 106. The operator controls include a High/Low shift lever 92 movable in a plane extending vertically through a slot 94, a Main or 4/5 shift lever 96 movable or shiftable in a plane extending vertically through a slot 98, and a Forward/Neutral/Reverse (FNR) shift lever 100 movable in a slot 102. A throttle lever 104 is also provided on the console for controlling engine speed.

The High/Low shift lever 92 is connected through a mechanical linkage (not shown) to the High/Low coupler 65 and is shiftable between a low (L) position whereat transfer member 68 of coupler 65 is engaged with the seventh transfer gear 59 and a high (H) position whereat transfer member 68 is engaged with the sixth transfer gear 39.

The 4/5 shift lever 96 is connected through a mechanical linkage (not shown) to the 4/5 coupler 55 and is shiftable between a "4" position whereat the transfer member 58 of the 4/5 coupler 55 engages the fourth drive gear 51 and a "5" position whereat transfer member 58 engages the second drive shaft portion 23.

The FNR shift lever 100 is connected through a mechanical linkage (not shown) to the Forward/Reverse coupler 25 and is shiftable between a forward position (F) whereat transfer member 28 of coupler 25 engages the second drive member 27 and a reverse position (R) whereat transfer member 28 engages the first drive member 29. In Fig. 2, a portion of the FNR shift lever is broken away to fully show a display 110.

The levers 92, 96 and 100 all have a neutral or out-of-gear center position but the neutral of the FNR lever 100 is considered to be the system neutral.

The 4/5 shift lever 96 is provided with an Up-Shift push-button 112 and a Down-Shift push-button 114 for powershifting between gears within ranges selected by the High/Low shift lever 92 and the 4/5 shift lever 96. The push-buttons are positioned on one side of shift lever 96 so that an operator may use the thumb of one hand to selectively actuate the push-buttons while still maintaining a grip on the lever. A ridge or raised portion 116 on the side of the shift lever enables an operator to "find" a thumb position on a desired push-button without actually looking to see which push-button he is touching.

The push-buttons actuate switches and provide input signals to a microprocessor 80. The microprocessor 80 includes a counter (not shown) which is incremented by one for each actuation of the Up-Shift push-button 112 and decremented by one for each actuation of the Down-Shift push-button 114. The counter is constrained to the count range 1-4 and each count defines a powershift gear selection. The count in the counter determines which clutch is actuated in each of the clutch pairs C1, C2 and C3, C4, as subsequently explained.

One skilled in the art will readily realize from the above description that the transmission, without benefit of the creeper mechanism 70 described below, provides 16 different forward rotational speeds for the output shaft 11 for a given rotational speed of the input shaft 10. These 16 speed variations are accomplished by alternate drive paths provided by (1) the choice between the first and second hydraulic clutches C1 and C2 as determined by the powershift gear selected by push-buttons 112, 114; (2) the engagement of the mechanically shifted third coupler 55 as determined by the 4/5 shift lever 96; (3) the choice between the third and fourth hydraulic clutches C3 and C4 also as determined by the powershift gear selected by push-buttons 112, 114; and (4) the engagement of the mechanically shifted fourth coupler 65 as determined by the position of the High/Low shift lever 92. The sixteen alternative torque transmitting paths should be obvious to one skilled in the art from the foregoing description. Table I indicates typical ratios of input to output shaft speed for various positions of the 4/5 shift lever 96, the High/Low shift lever 92, and the selected powershift gear.

**TABLE I**

| Range 4/5 | Levers High/Low | Powershift Gear/Clutches | Gear Display | Ratio |
|---|---|---|---|---|
| 4 | Low | 1 C2, C4 | 1L | 8.51 |
| 4 | Low | 2 C2, C3 | 2L | 6.97 |
| 4 | Low | 3 C1, C4 | 3L | 5.69 |
| 4 | Low | 4 C1, C3 | 4L | 4.66 |
| 5 | Low | 1 C2, C4 | 5L | 3.60 |
| 5 | Low | 2 C2, C3 | 6L | 2.95 |
| 5 | Low | 3 C1, C4 | 7L | 2.41 |
| 5 | Low | 4 C1, C3 | 8L | 1.97 |
| 4 | High | 1 C2, C4 | 1H | 2.74 |
| 4 | High | 2 C2, C3 | 2H | 2.25 |
| 4 | High | 3 C1, C4 | 3H | 1.84 |
| 4 | High | 4 C1, C3 | 4H | 1.50 |
| 5 | High | 1 C2, C4 | 5H | 1.16 |
| 5 | High | 2 C2, C3 | 6H | 0.95 |
| 5 | High | 3 C1, C4 | 7H | 0.78 |
| 5 | High | 4 C1, C3 | 8H | 0.64 |

From Table I, several observations may be made. The High/Low shift lever 92 permits the operator to select a low range of speeds 1L-8L or a high range of speeds 1H-8H. The 4/5 shift lever 96 divides each of these ranges into two sub-ranges designated the 4 range and the 5 range each having four possible speeds. Within each sub-range, the Up-Shift and Down-Shift push-buttons may be utilized to select one of the four speeds within the sub-range.

Returning now to the creeper mechanism 70, an additional 16 speeds of rotation of the output shaft 11 (8 forward and 8 reverse) for a given speed of rotation of the input shaft 10 can be obtained. The creeper mechanism 70 is an optional device. If the creeper mechanism 70 is not desired, the shiftable power transfer member 18 of the first coupler 15 is directly connected to the first drive member 16 so that the power transfer member 18 cannot be shifted out of engagement with the first drive member 16. The creeper mechanism 70 includes a creeper drive gear 54 rotatably mounted on the first drive shaft portion 22 to be rotatable independently thereof. The creeper drive gear 54 has a second drive member 17 of the first coupler 15 affixed thereto. A creeper transfer gear 20, smaller than the creeper drive gear 54, is affixed to the first jack shaft 12 for rotation with the first jack shaft 12 and the first and second transfer gear 42, 48, and placed in intermeshing relationship with the creeper drive gear 54. A spring (not shown) normally biases the creeper drive gear 54 and drive member 17 out of engagement with the power transfer member 18.

The creeper mechanism 70 is activated by actuating a piston 82 as described below which acts against the gear 54 to move drive member 17 into engagement with the power transfer member 18 of the first coupler 15. Instead of rotational power being transferred to the first drive shaft portion 22 via the second drive gear 26, rotational power is transferred from the first jack shaft 12 to the creeper transfer gear 20 and to the intermeshed creeper drive gear 54, and then to the first drive shaft portion 22 through the coupler 15. In instances where the first clutch C1 is engaged, rotational power is transferred from the input shaft 10 to the first drive gear 34, the first transfer gear 42, and the first jack shaft 12 so that the intermeshed second drive gear 26 and second transfer gear 48 are rotated without effect. When the second clutch C2 is engaged, rotational power reaches the first jack shaft 12 via the second drive gear 26 and the intermeshed second transfer gear 48, so that the first drive gear 34 is rotated on the input shaft 10 without effect by the driven first transfer gear 42.

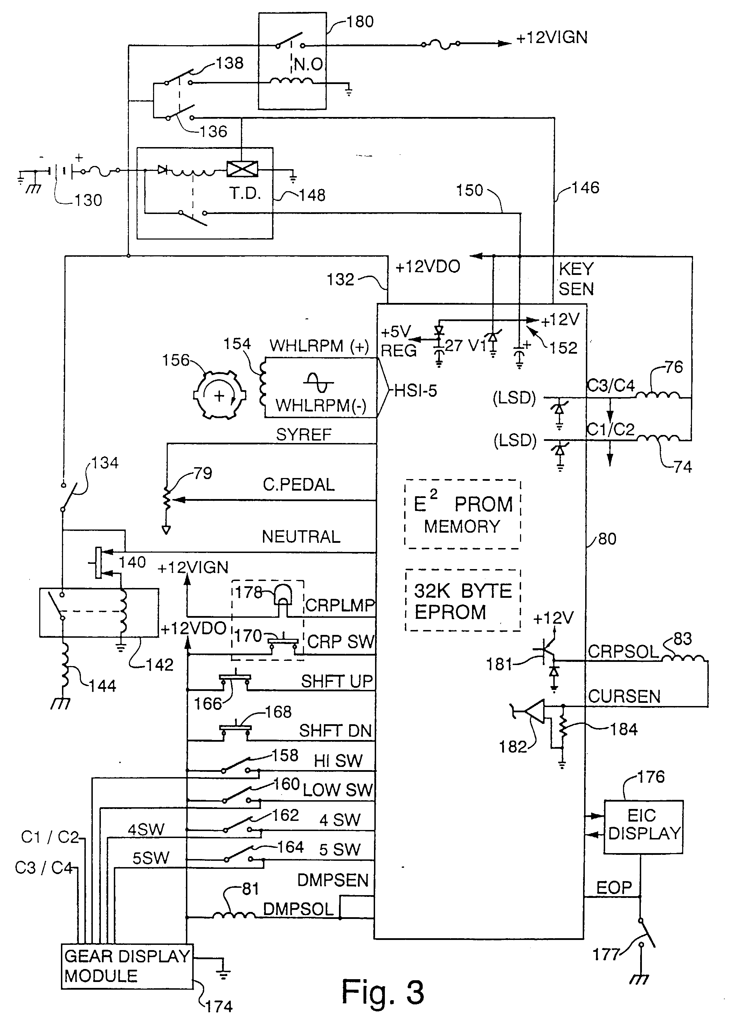

The creeper mechanism 70 is actuated by operating a switch 170 (Fig. 3) associated with the operator controls. The microprocessor 80 may respond to operation of the switch to cause actuation of piston 82 only if certain conditions are present as subsequently described.

The reverse operating capabilities of the transmission are actuated by an engagement of the shiftable power transfer member 28 with the first drive member 29 of the second coupler 25, rather than the second drive member 27. This is accomplished through a mechanical linkage by moving the FNR lever 100 (Fig. 2) to the reverse (R) position. Rotational power received by the first drive shaft portion 22, whether via the second drive gear 26 or the creeper drive gear 54, is then transferred through the second coupler 25 to the reverse drive gear 33. A reverse transfer gear 38 is affixed to the second jack shaft 13 for rotation therewith. A reversing idler 72 is rotatably supported from the transmission casing (not shown) for intermeshing engagement with both the reverse drive gear 33 and the reverse transfer gear 38. As a result, the direction of rotation of the second jack shaft 13 is reversed when power is transferred through the reverse drive gear 33, when compared to the rotation of the second jack shaft 13 when power is transferred thereto from the third drive gear 36.

In operation, the second coupler 25 controls the forward/reverse operation of the transmission in response to movement of the FNR lever 100. When the shiftable power transfer member 28 is engaged with the second drive member 27 of the second coupler 25, the output shaft 11 is rotated in a normal forward direction of rotation. Shifting the power transfer member 28 to the first drive member 29 of the second coupler 25 effects a transfer of rotational power from the first drive shaft portion 22 to the reverse drive gear 33, which in turn transfers the rotational power through the reversing idler 72 to the reverse transfer gear 38 to rotate the second jack shaft 13 in the opposing direction to that described above with respect to the normal forward operation of the transmission. The rotational power is then transferred from the third transfer gear 40 to the intermeshed third drive gear 36 to cause rotation of the second drive shaft portion 23 in a reverse direction.

Although all the transmission components "downstream" of the second drive shaft portion 23 will then rotate in the opposite direction to that described above with respect to the normal forward operation of the transmission, ultimately causing the output shaft 11 to rotate in a normal reverse direction, all of the gear selection alternatives noted above are equally applicable when the reverse drive gear 33 has been engaged. Accordingly, the output shaft 11 of the transmission is capable of operation at 16 different speeds in both the forward and reverse modes. Furthermore, when the creeper mechanism 70 is actuated, gear ratios are increased by a factor of about 5.08 times those shown in Table I. The microprocessor 80 prevents actuation of the creeper mechanism when the High/Low shift lever 92 selects the high range. Thus, the creeper mechanism provides 8 additional forward gear speed ratios and 8 additional reverse gear speed ratios making a total of 24 available gear speed ratios in each direction.

The control system 75 for the transmission involves both mechanical and hydraulic control mechanisms, as well as the microprocessor 80 for automatic control of the hydraulic control mechanisms. As noted above, the couplers 25, 55 and 65 can be shifted mechanically through conventional linkages by means of shift levers 92, 96 and 100. The hydraulic powershift clutches C1 and C2 are controlled through a first electro-hydraulic solenoid valve S1 actuated by a solenoid 74, while the other pair of hydraulic powershift clutches C3 and C4 is controlled through a second electro-hydraulic solenoid valve S2 actuated by a solenoid 76. Both valves S1 and S2 are two position spool valves that direct a flow of hydraulic fluid to a selected one of the hydraulic clutches in a pair. As a result, both clutches in each pair of hydraulic clutches cannot be simultaneously actuated. Fig. 1 depicts the positions of valves S1 and S2 when their solenoids 74 and 76 are not energized. Solenoids 74 and 76 are controlled by microprocessor 80 in response to actuation of the Up-Shift and Down-Shift push-buttons 112, 114 and movement of the range shift levers 92 and 96 as subsequently described.

The control system 75 further includes a modulating hydraulic valve 77 that is operatively connected to the clutch pedal 78 of the tractor (not shown). The modulating valve 77 controls the flow of hydraulic fluid to the second solenoid valve S2 in response to the position of the clutch pedal 78, such that the amount of hydraulic fluid sent to the clutch pack 60 through the second solenoid valve S2 varies proportionately with the position of the clutch pedal 78 between a fully depressed and a fully released or retracted position. As a result, the torque carrying capability of the hydraulic clutches C3 and C4 can be feathered for a smooth start-up operation of the transmission in transferring rotational power from the input shaft 10 to the output shaft 11, particularly under load conditions.

The control system 75 also includes an electro-hydraulic dump valve S3 which is actuated by a solenoid 81 and controls the flow of hydraulic fluid to the hydraulic valves S1, S2 and 77. The valve S3 is shown in the position it occupies when solenoid 81 is not energized. A shifting of the master solenoid valve S3 to the "dump" position (solenoid 81 energized) releases all the pressure from the hydraulic clutches C1, C2, C3 and C4 and places the transmission in a "neutral" condition. The microprocessor 80 is operatively associated with the solenoids of all the two position solenoid valves S1, S2, S3 and S4 to control the positioning thereof and the direction of flow of hydraulic fluid to and from the powershift clutches C1, C2, C3 and C4 and to the creeper hydraulic piston 82. The clutch pedal 78 is operatively connected to a potentiometer 79, which in turn is connected to the microprocessor 80, to serve as a position sensor for the clutch pedal 78.

When the clutch pedal 78 reaches a predetermined or threshold position, preferably near the fully depressed position, it acts through valve 77 to release substantially all the hydraulic pressure from the clutch pack 60. The threshold position (FCLUTCH THR) is spaced from the fully depressed position by about 12% of the distance between the fully-released and fully-depressed clutch pedal positions. When the microprocessor 80 senses that the clutch pedal has been depressed to a threshold level it actuates the dump valve S3 to release fluid pressure from all the hydraulic clutches C1, C2, C3 and C4. This minimizes wear on the gear synchros during a shift since the synchros are completely de-coupled from the engine during a shift. Furthermore, the 4/5 coupler 55 and the FNR coupler 25, which are the most frequently used, are decoupled from the output shaft 11.

The creeper mechanism 70 is actuated through a separate creeper hydraulic valve S4 operatively connected to a hydraulic piston 82 effective to shift the first coupler 15 as described above. The creeper hydraulic valve S4 is actuated by a solenoid 83 that is controlled by microprocessor 80. The dump valve S3 must be dumped to place the transmission in a "neutral" position to permit the non-synchronized first coupler 15 to shift as smoothly as possible. Release of the creeper mechanism 70 is effected by a spring (not shown) when the microprocessor 80 de-energizes solenoid 83 so that fluid in the cylinder for piston 82 may flow out to the sump. One skilled in the art will readily realize that the creeper solenoid valve S4 is not operatively associated with the dump valve S3 so that the piston 82 can be shifted even when the dump valve S3 is in the "dump" position.

Briefly, the microprocessor 80 may be a type 8061 microprocessor of the type used by Ford Motor Company for automotive control. The microprocessor includes analog to digital converter input channels and a frequency input channel in addition to digital inputs. It also includes a power supply responsive to the tractor battery voltage for producing a regulated +5V voltage. In addition to the usual ROM and RAM memories and data processing circuits the microprocessor includes a "keep-alive" RAM powered directly from the tractor battery so that data in the memory is not lost when the tractor ignition switch is turned off.

Referring now to Fig. 3, the tractor battery 130 is directly connected to the microprocessor 80 via a lead 132 to power the keep-alive memory. The battery is also connected to three sets of ignition switch contacts 134, 136 and 138. Switch contacts 134 are closed only when the ignition key is turned to the "crank" position. The FNR lever 100 (Fig. 2) controls a switch 140 and closes the switch when the lever is in the neutral position. If the lever 100 is in neutral when the ignition key is turned to the crank position, a start relay 142 is energized. The start relay closes its normally open contacts thus establishing a circuit from the battery through the ignition switch contacts 134 and the contacts of relay 142 to an engine starter coil 144. After the tractor engine starts, the operator releases the ignition key and it moves to a "run" position to open contacts 134.

Switch contacts 136 and 138 remain closed when the ignition key is released to the run position. When contacts 136 are closed they apply battery voltage to a data input of the microprocessor 80 over lead 146 and to a time delay relay 148. When the relay 148 is energized, it closes its normally open contacts so that the battery voltage +12VDO appears on lead 150. The relay 148 remains energized for about 8 seconds after ignition switch contacts 136 are opened so that power is available to microprocessor 80 and the solenoids 74,76,81 and 83 for this interval after the ignition key is turned to its "off" position.

The voltage +12VDO is applied to one end of solenoids 74 and 76 which control the valves S1 and S2, respectively. These solenoids are selectively energized by the microprocessor 80 by selectively connecting the other ends of the solenoids to ground through a low-side driver (not shown).

When +12VDO is applied to the microprocessor 80 the power supply circuits 152 therein generate the regulated voltage +5V for powering the circuits within the microprocessor. The +5V is continuously applied to the clutch pedal potentiometer 79 as the signal SVREF and the output signal from the potentiometer is applied to one of the analog input channels of the microprocessor.

The frequency input of microprocessor 80 is connected to a sensor 154 which senses the teeth on a gear 156. The gear 156 is affixed to the transmission output shaft 11 and as the tractor moves sensor 154 produces an output signal to the microprocessor, the frequency of the output signal being proportional to the ground speed of the tractor.

In addition to shifting the couplers 25, 55 and 65 as described above, movement of levers 92, 96 and 100 also causes actuation of switches to provide input signals to the microprocessor indicating the position of the switches. The High/Low shift lever 92 closes a High switch 158 when the lever is in the H position and a Low switch 160 when it is in the L position. The 4/5 lever 96 closes a "4" switch 162 when it is in the "4" position and a "5" switch 164 when it is in the "5" position. Switches 158, 160, 162 and 164 may be ball switches operated by sliding movement of the transmission shift rail (not shown) as the rail is moved by one of the levers 92 or 96.

When the FNR lever 100 is in the neutral position it closes the switch 140. As described above, switch 140 must be closed in order to start the engine which drives the transmission input shaft 10.

The Up-shift and Down-Shift push-buttons 112, 114 are located on the 4/5 lever 96 control closure of two switches 166 and 168, respectively. These are momentary switches in that the microprocessor 80 senses for a change in the level of the signals it receives from these switches. This may be accomplished by saving each sampling of a switch and comparing it with the next succeeding sampling.

Associated with the operator controls is a creeper switch having contacts 170. The creeper switch is also a momentary switch which toggles between creeper gear engagement and dis-engagement provided that conditions are right for entry into, or exit from, the creeper mode. An open-to-closed transition of the creeper switch contacts 170 is sensed by microprocessor 80 to initiate entry into, or exit from, the creeper mode.

The switch contacts 158, 160, 162, 164, 166, 168 and 170 are connected to +12VDO so that the switches are "alive" for eight seconds after the ignition switch is turned off. In addition to applying signals to the microprocessor 80, the switch contacts 158, 160, 162 and 164 are connected to a gear display module 174. The module 174 includes logic responsive to the conditions of the 4/5 shift lever switches 162 and 164, and the states of the signals C1/C2 and C3/C4 produced by microprocessor 80 to energize the clutch valve solenoids 74 and 76, and to control the lighting of one of the numerals 1 through 8 on the strip display 110 (Fig. 2). This display may comprise eight lamps backlighting a translucent panel bearing the numerals.

The display module also receives a signal when either of the switches 158 or 160 is closed. One of these switches must be closed, that is, the High/Low lever 92 must not be in neutral, for the display 110 to be lighted.

Although there are 16 forward or reverse gear speeds, the display 110 displays only eight speeds. The reason for this is explained below. A separate electronic instrument cluster (EIC) 176 includes a segmented display on the tractor dashboard for displaying the numerals 1 through 8 with an "H" or an "L" to fully indicate the selected gear speed. The electronic instrument cluster is connected to microprocessor 80 via serial data links and includes sensors for sensing various tractor conditions not relevant to the present invention.

The EIC display 176 and a creeper lamp 178 are powered by a voltage +12VIGN which is available as long as the ignition key is in the "run" position. The ignition switch contact 138 energizes a relay 180 which closes its contacts so that +12VIGN is derived directly from battery 130. The creeper lamp 178 is turned on by microprocessor 80 when the creeper mechanism is engaged and the microprocessor causes the lamp to flash in the event tests of the creeper mechanism should not be normal.

Insofar as control of the transmission is concerned, the microprocessor 80 produces four output signals. They are the low-level signals C1/C2 and C3/C4 for energizing the solenoids 74 and 76 of the clutch control valves S1 and S2, the low level signal DMPSOL which energizes the solenoid 81 of the dump valve S3, and the high level signal CRPSOL which energizes the solenoid 83 of the creeper valve S4. The solenoids 74, 76 and 81 are connected to +12VDO so that the solenoids may remain energized for an interval after the ignition switch is turned to the "off" position.

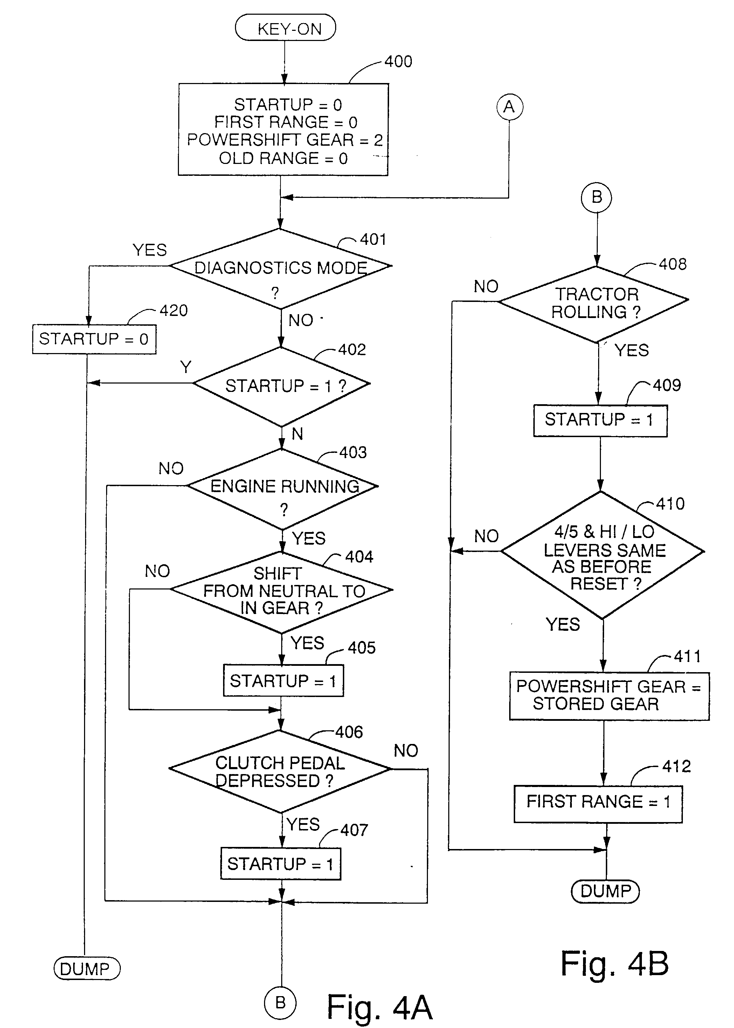

Generally speaking, the microprocessor 80 executes a power-on reset followed by an Initialization routine when the ignition switch is turned on. During initialization, two flags designated STARTUP and FIRST RANGE are reset to zero, a memory location POWERSHIFT GEAR is set to the value 2 and a memory location OLD RANGE is set to zero as indicated by step 400 in Fig. 4A.

The flag STARTUP is set during execution of a Startup routine as subsequently described and, when set, indicates that a proper sequence of events has taken place such that the driveline may be engaged, that is, the dump valve solenoid 81 may be de-energized so that the engine and input shaft 10 drive the transmission through clutch C1 or C2. There are different conditions for setting START-UP depending on whether the tractor is, or is not, moving. If the tractor is not moving STARTUP is set if the engine is running and (1) there is a transition of the FNR lever 100 from neutral to forward or reverse or (2) there is a transition of the clutch pedal from a disengaged to an engaged position. STARTUP is always set the first time the Startup routine is executed if the tractor is rolling. Once set, STARTUP remains set until the ignition is turned off or the operator initiates a diagnostic mode.

The flag FIRST RANGE, when set, enables lighting of the EIC display 176. It is set as subsequently described, and once set it remains set until the ignition is turned off. This flag also controls the initial powershift gear selected during startup.

The memory location POWERSHIFT GEAR stores a value of from 1 to 4. This value determines what output signals the microprocessor 80 produces to energize the solenoids 74 and 76. It thus determines the selected powershift gear speed ratio.

OLD RANGE is a memory location which is used to save an indication of the position of the 4/5 shift lever 92 during a range shift.

The microprocessor program may best be understood by first considering a normal start, that is, the tractor is not moving, the ignition key is turned to the crank position with FNR lever 100 in neutral to start the engine, and the clutch pedal is depressed. The High/Low shift lever 92 and the 4/5 shift lever 96 may be in any position. Once the initialization at step 400 has been completed the microprocessor checks a switch (not shown) at step 401 to see if the operator has indicated a desire to enter a diagnostic mode by actuating the switch. If the operator has actuated the diagnostics switch, the program branches to step 420 where STARTUP is cleared before the program moves to a Dump routine described below. The diagnostic mode is not relevant to the present invention and will not be further described.

If the test at step 401 proves false, STARTUP is tested at step 402. The first time step 402 is executed after the ignition key is turned on, STARTUP will be zero since it was reset at step 400 during initialization. The program then tests the output of an engine oil pressure switch 177 (Fig. 3) to see if the engine is running. Assuming a normal start-up, the test at step 403 proves false and the program moves directly to step 408 (Fig. 4B) where the microprocessor senses the output of the speed sensor 154 and compares it with a value START THRESH to determine if the tractor is moving. In this regard, the initial powershift gear selected at start-up is determined as described below by the positions of shift levers 92 and 96 if the tractor is stationary. On the other hand, if the tractor is moving and the shift levers are not shifted, the initial powershift gear selected is determined by steps 409-412 and is the gear in effect at the time the microprocessor is reset.

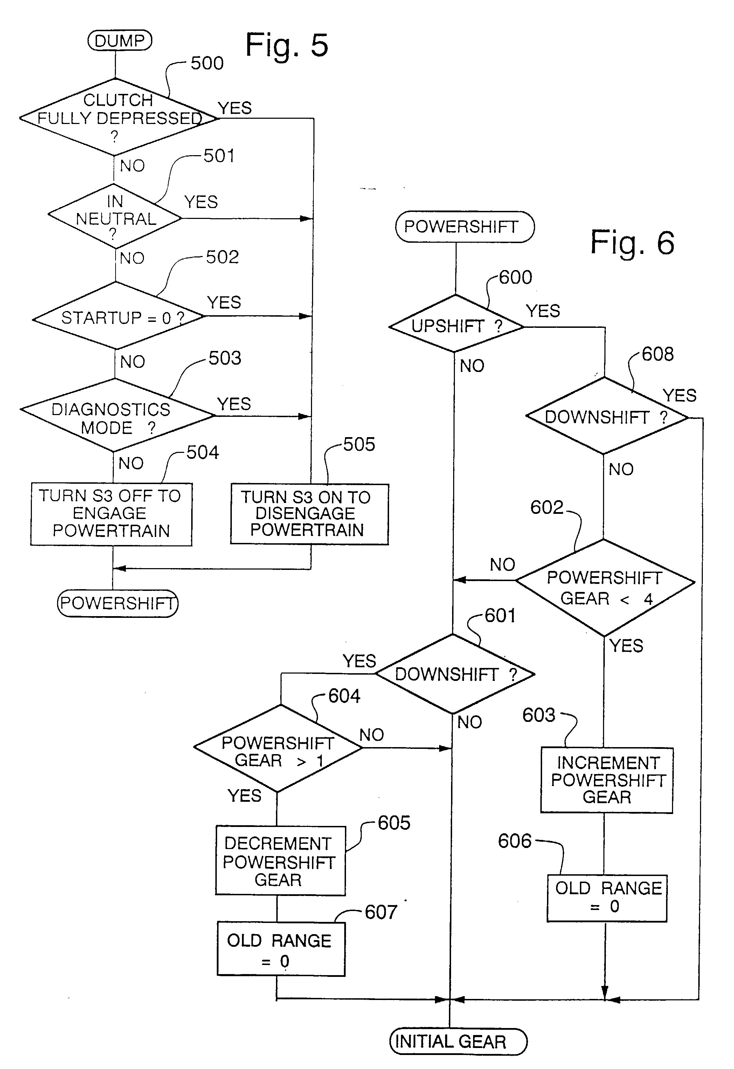

Under the assumed conditions the test at step 408 proves false and the program branches to the Dump routine illustrated in Fig. 5.

The purpose of the Dump routine is to control the solenoid 81 associated with the dump valve S3, thereby enabling the drive train to be engaged or disengaged by engaging or disengaging clutches C1-C4, i.e. coupling or decoupling the input shaft 10 to the output shaft 11.

At step 500, the output of the clutch pedal potentiometer 79 is again tested and since it is assumed that the clutch pedal is depressed, the program branches to step 505 where the microprocessor produces an output signal DUMPSOL to energize solenoid 81. When the solenoid is energized, the hydraulic fluid is dumped through the dump valve S3 thereby ensuring that the clutches C1-C4 are disengaged.

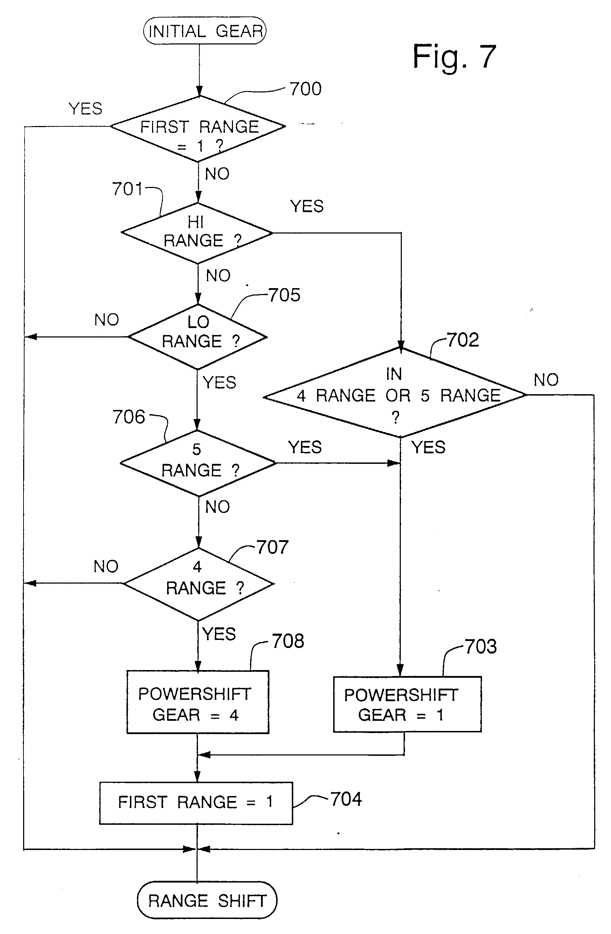

After the clutches C1-C4 are disengaged, the program advances to a Powershift routine as shown in Fig. 6. The Powershift routine is the routine which increments or decrements the value POWERSHIFT GEAR each time the operator depresses one of the powershift push-buttons 112, 114. The Up-Shift push-button switch contacts 166 are tested for a signal level transition at step 600 and the Down-Shift push-button switch contacts 168 are similarly tested at step 601. This is accomplished by sensing the present states of the contacts at steps 600 and 601, saving indications of the states in memory, and comparing the saved indications with the states sensed the next time steps 600 and 601 are executed. Assuming that the operator has not depressed either powershift push-button, the tests at steps 600 and 601 prove false and the program advances to step 700 of the Initial Gear selection routine shown in Fig. 7.

The purpose of the Initial Gear routine is to make an initial powershift gear selection during a start-up so as to give a nearly consistent smooth starting speed without being too slow. Generally speaking, if the 4/5 shift lever 96 is in the "4" position and the High/Low shift lever 92 is in the low position, powershift gear 4 is selected. For all other conditions of the shift levers (excluding neutral) powershift gear 1 is selected. Table II shows the initial gear selection during a normal startup for various positions of the 4/5 and High/Low shift levers.

**Table II**

| ranges 4/5 | levers High/Low | powershift gear | initial gear |
|---|---|---|---|
| 4 | Low | 4 | 4L |
| 5 | Low | 1 | 5L |
| 4 | High | 1 | 1H |
| 5 | High | 1 | 5H |

In Fig. 7, the flag FIRST RANGE has not been set so the test of this flag at step 700 proves false. The routine moves to step 701 to check if the High/Low shift lever 92 is set for the high range (switch 158 closed). If it is, the 4/5 shift lever switches 162 and 164 are tested at step 702 to see if the 4/5 shift lever 96 is in either the 4 or 5 position. If it is, location POWERSHIFT GEAR is set to one at step 703 and the flag FIRST RANGE is set at step 704 before an exit is made from the routine. The initial gear selection will thus be 1H or 5H depending on whether the 4/5 shift lever is set to the "4" or "5" position, respectively.

If the test at step 701 shows that the High/Low shift lever is not set for the high range, a test is made at step 705 to see if it is set for the low range (switch 160 closed). Assuming for the moment that the test at step 705 proves true, a test is made at step 706 to see if the 4/5 shift lever is set for the "5" position (switch 164 closed). If it is, the routine branches to step 703 to again select powershift gear 1 and set FIRST RANGE at step 704. The initial gear selection in this case will thus be 5L. On the other hand, if the test at step 706 proves false, the 4/5 lever is tested at step 707 to see if it is in the "4" position (switch 162 closed). If it is, step 708 is executed to set location POWERSHIFT GEAR to four before FIRST RANGE is set at step 704. The initial gear selection in this case is thus 4L.

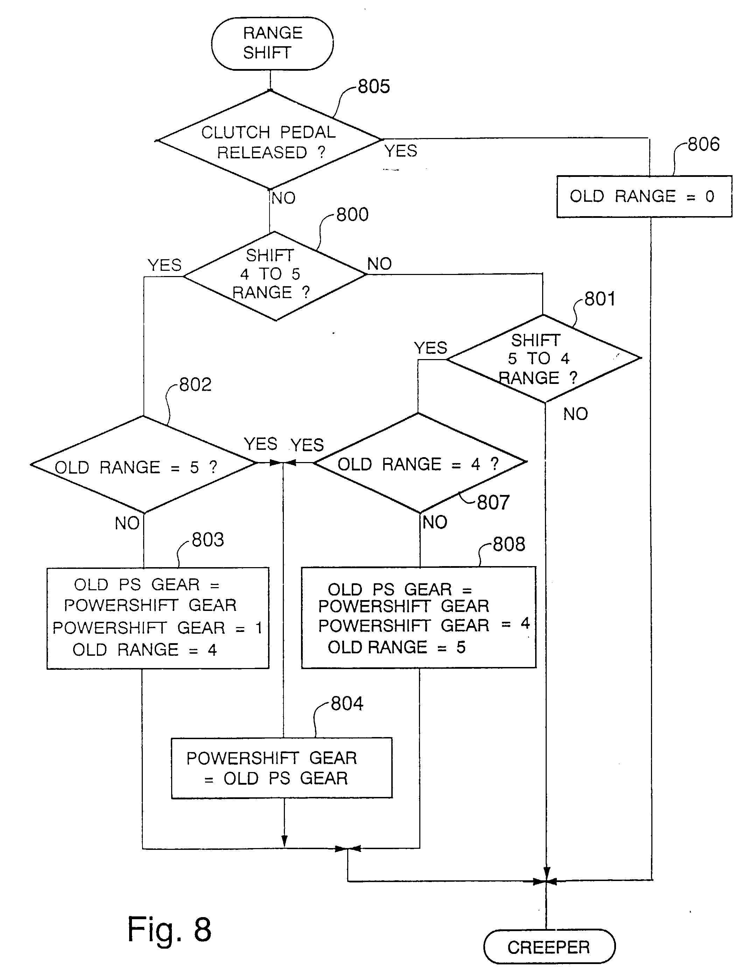

If the test at step 705 proves false, it means that the High/Low select lever is in its neutral position. In this case an exit is made from the Initial Gear selection routine to a Range Shift routine (Fig. 8) without setting FIRST RANGE or making an initial powershift gear selection since the transmission cannot transmit torque from its input shaft to its output shaft when the High/Low lever is in neutral. The value in POWERSHIFT GEAR continues to hold the value 2 entered therein at step 400.

In like manner, if the test at step 702 or 707 proves false no initial powershift gear selection is made because the transmission cannot transmit torque from the input shaft to the output shaft when the 4/5 shift lever is in neutral. The routine branches to step 805 of the Range Shift routine shown in Fig. 8 with the value 2 still in POWERSHIFT GEAR and FIRST RANGE still reset.

The purpose of the Range Shift routine is to change the selected powershift gear when the 4/5 range shift lever 96 is shifted so as to provide a more gradual speed increase or decrease. That is, when the 4/5 shift lever is shifted from the "4" to the "5" position, the Range Shift routine automatically selects powershift gear 1 by setting location POWERSHIFT GEAR to 1 regardless of its count at the time the lever is shifted. On the other hand, when the 4/5 shift lever is shifted from the "5" to the "4" position the Range Shift routine selects powershift gear 4 by setting POWERSHIFT GEAR to 4. The Range Shift routine also includes "change of mind" logic which permits POWERSHIFT GEAR to be restored to its initial value if the 4/5 shift lever is shifted and then returned to its initial position before the clutch pedal is released.

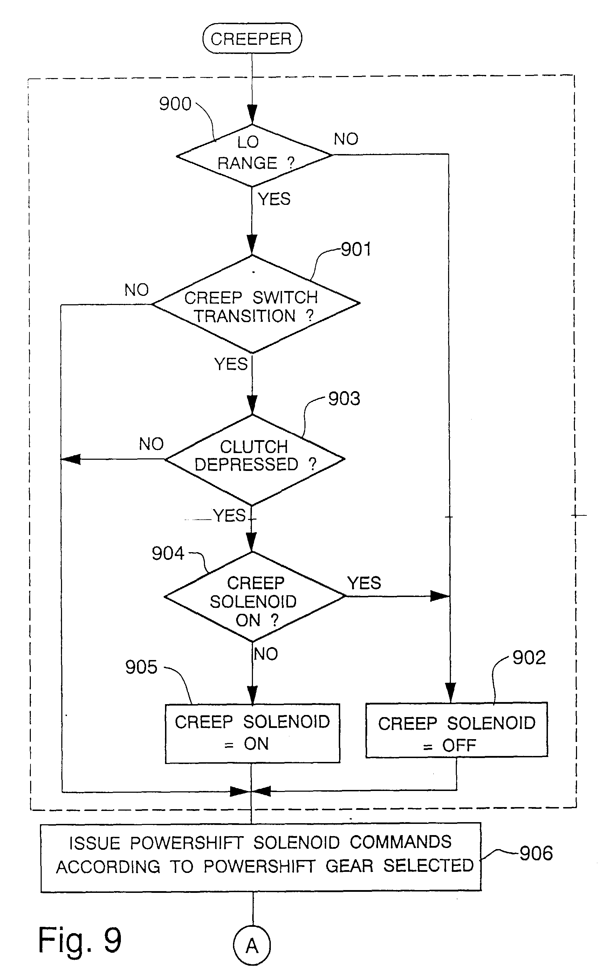

At step 805 the potentiometer 79 is tested to see if the clutch pedal is released. Since it is assumed that the clutch pedal is depressed, the test at step 805 proves false and the program moves to step 800 where it tests to see if the 4/5 shift lever has been shifted from the 4 to the 5 position. In this regard, the microprocessor 80 saves the status of switches 158, 160, 162 and 164 so that a comparison may be made between the previously sensed status and the present status. Under the assumed conditions, the 4/5 shift lever has not been moved so the test at step 800 proves false. For the same reason, the test at step 801 proves false since the 4/5 shift lever has not been shifted from its "5" to its "4" position. An exit is made from step 801 to the Creeper routine shown in Fig. 9.

The Creeper routine is provided to monitor and control the creeper valve S4 which in turn controls engagement of the creeper gear 54 by actuating piston 82. At step 900, the High/Low shift lever switch 158 is tested to see if the High/Low shift lever is positioned for the low range. If the High/Low shift lever is not in the low position the creeper gear cannot be engaged. The program jumps to step 902 where the microprocessor resets a CREEPER ON flag to indicate that the creeper solenoid 83 is not energized. At step 902 the microprocessor 80 also sets it output so that the creeper solenoid 83 is de-energized before the routine moves to step 906. If the test at step 900 proves true, the creeper switch contacts 170 are tested for a transition at step 901. Assuming the operator has not actuated the creeper switch the program branches to step 906 without changing the state of the creeper valve solenoid 83.

The creeper routine is fully disclosed in the above-referenced EP-A-0.517.422.

After step 901 is executed the program moves to step 906 which sends the signals C1/C2 and C3/C4 to the solenoids 74 and 76 to actuate the clutch valves C1-C4 according to the value stored at location POWERSHIFT GEAR. At this point POWERSHIFT GEAR contains the value entered therein at step 703 or 708 if the range shift levers 92 and 96 are both out of neutral or the value 2 (from step 400) if one or both of the shift levers is in neutral. However, the drive train is not engaged because the dump valve is in its dump position.

Execution of step 906 completes one cycle of the microprocessor program and it branches back to step 401 (Fig. 4). Assuming for the moment that the engine has not yet started and the operator does not shift any levers or release the clutch pedal, the program is repeated as described above with one possible exception. In Fig. 7, if neither the High/Low shift lever 92 nor the 4/5 shift lever 96 was in neutral, the flag FIRST RANGE was set at step 704 during the first execution of the program. Therefore, on the second and subsequent executions of the program a jump is made from step 700 to the Range Shift routine without changing the value entered into POWERSHIFT GEAR during the first execution.

On the other hand, if either of the shift levers 92 or 96 was in neutral during the first execution the flag FIRST RANGE was not set. Therefore, if the next action of the operator is to move one or both of the shift levers so that neither is in neutral then the flag FIRST RANGE is set at step 704 and location POWERSHIFT GEAR is changed at step 703 or 708, depending on the lever positions, the next time the Initial Gear routine is executed.

Assume now that the engine starts. After the engine is running, the next test of switch 177 at step 403 proves true and at step 404 the FNR shift lever switch is tested to see if the lever has been shifted from neutral, required to start the engine, to either forward or reverse. Assuming there has been no shift, the program moves directly to step 406.

At step 406, the output of clutch pedal potentiometer 79 is tested to see if the clutch pedal is depressed. Assuming that the clutch pedal is still depressed, STARTUP is set at step 407 and the test at step 408 proves false so the routine moves to step 500. Since the clutch pedal is still depressed, the program moves to step 505 as previously described to energize the dump valve solenoid 81. The program sequences through the remaining steps as described above. However, on the next and subsequent executions of the program it will branch directly from step 402 to the DUMP routine because the flag STARTUP has been set.

If the operator starts the engine without depressing the clutch pedal 78 and he first moves the FNR shift lever out of neutral to either the forward or reverse position, the program detects this shift at step 404 and sets the flag STARTUP at step 405. The released clutch pedal condition is detected at step 406 and when the test is made at step 408 to see if the tractor is moving the program jumps to step 500. The clutch pedal is released so the program proceeds to step 501 where the neutral switch 140 is tested and found to be open. The program then tests STARTUP at step 502 and since the flag is now set the program tests at step 503 for operation of the Diagnostic mode switch. Assuming the switch is not actuated, the program moves to step 504 where the microprocessor deenergizes solenoid 81 of the dump valve S3. Hydraulic pressure fluid is thus applied through the dump valve to selected ones of the clutches C1-C4 thereby engaging the drive train, i.e. coupling the input shaft 10 to the transmission gearing. The particular clutches energized depends on the powershift solenoid commands set up for energizing the solenoids 74 and 76 of the valves S1 and S2 the last time step 906 was executed. Since the flag STARTUP was set at step 405, any subsequent executions of the program find the flag set when step 402 is executed so that steps 403-407 are skipped.

Once the flag STARTUP is set as described above, the program follows a sequence which comprises steps 401, 402, the Dump routine of Fig. 5, the Powershift routine of Fig. 6, step 700, the Range Shift routine of Fig. 8 and the Creeper routine of Fig. 9.

Each execution of the Dump routine sets the output to the dump valve solenoid 81 so that hydraulic pressure fluid to clutches C1-C4 is maintained and the driveline remains engaged. The driveline is disengaged only if the clutch is depressed, the FNR shift lever is moved to neutral, or the diagnostic mode switch is actuated.

Each execution of the Powershift routine will vary depending on whether or not a powershift push-button 112, 114 is actuated. If neither push-button is actuated, steps 600 and 601 are executed as described above and location POWERSHIFT GEAR remains unchanged. If the Up-Shift push-button 112 is actuated, the test at step 600 proves true. The Down-Shift push-button 114 is tested at step 608 to make sure that both powershift push-buttons 112 and 114 are not being pressed. If the test at step 608 proves true then the program jumps to the Initial Gear routine without changing POWERSHIFT GEAR. If the test at step 608 proves false then the program proceeds to step 602. POWERSHIFT GEAR is tested at step 602 and if it is less than 4 it is incremented at step 603 and a location OLD RANGE is cleared at step 606. If POWERSHIFT GEAR is already at 4, the test at step 602 proves false and the program moves to step 601 without incrementing POWERSHIFT GEAR.

If the Down-Shift push-button is depressed, the action is detected at step 601 and the program branches to step 604 where POWERSHIFT GEAR is tested to see if it is greater than 1. If it is, POWERSHIFT GEAR is decremented at step 605 and location OLD RANGE is cleared at step 607. If the test at step 604 shows that POWERSHIFT GEAR is already 1, it is not modified.

The Range Shift routine comes into play only if there is a shift of the 4/5 shift lever 96 from the 4 range to the 5 range or the 5 range to the 4 range. Its purpose is to make the shift as smooth as possible, that is, make the change in gear speed ratios as small as possible when a shift is made between the two ranges. It does this by selecting the highest powershift gear (4) when there is a shift from the 5 to the 4 range and selecting the lowest powershift gear (1) when there is a shift from the 4 to the 5 range. The Range Shift routine also includes logic for restoring the value in POWERSHIFT GEAR in the event the operator depresses the clutch pedal, shifts the 4/5 shift lever, then changes his mind and returns the 4/5 shift lever to its original position before releasing the clutch above a threshold point. In this regard, the microprocessor digitizes the output signal from the clutch pedal potentiometer and compares it with a threshold value PCLUTCH THR to determine when the clutch pedal is at or above the threshold point.

Depression of the clutch pedal is detected at step 805 and the program moves to step 800. Assuming no change in the position of the 4/5 shift lever, the tests at steps 800 and 801 both prove false and POWERSHIFT GEAR is not changed when the routine is executed. If there is a shift from the 4 to 5 range, this is detected at step 800 and POWERSHIFT GEAR is set to 1 at step 803 since OLD RANGE will contain a value of zero when the test is made at step 802. On the other hand, if there is a shift from the 5 range to the 4 range, this is detected at step 801 and POWERSHIFT GEAR is set to 4 at step 808 since OLD RANGE will contain a zero when the test is made at step 807.

The advantage of the range shift logic is evident from Table I. Assume that the transmission is in, for example, gear 5L and the 4/5 shift lever is moved to the 4 range. Without the range shift logic, the powershift gear selection would remain unchanged so that gear 1L would be selected. The gear speed ratio would change from 3.60 to 8.51. On the other hand, with the range shift logic in effect, the powershift gear is changed from 1 to 4 when the 4/5 shift lever is moved so that gear 4L is selected. In this case the gear speed ratio changes from 3.60 to 4.66 thus providing a smaller change in the gear speed ratio.

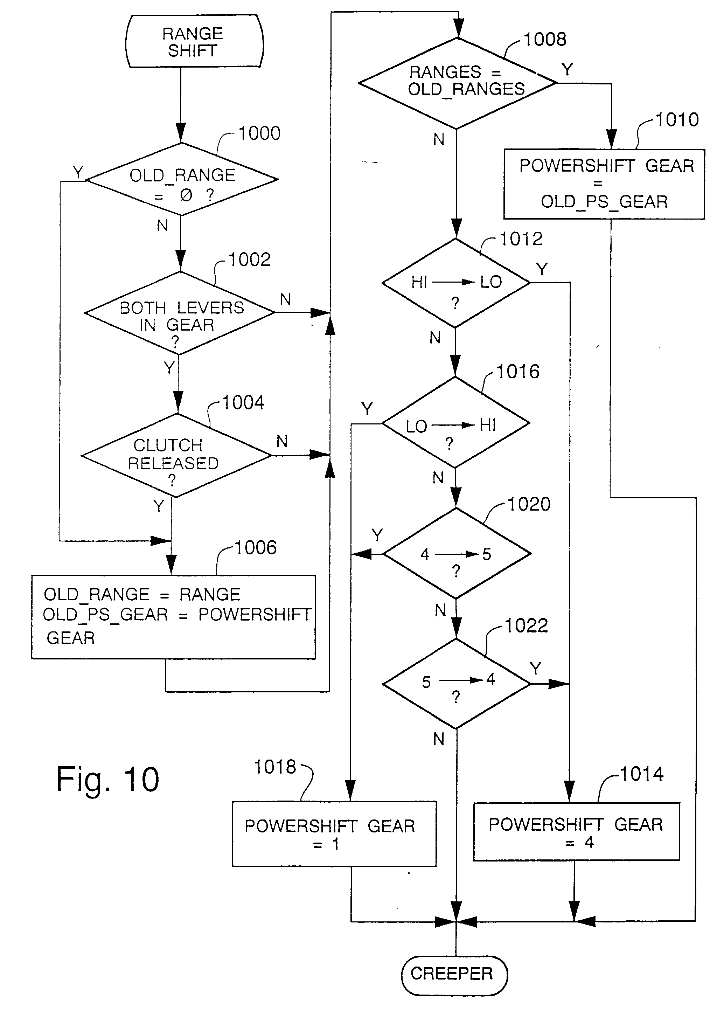

Similar range shift logic is not provided for the High/Low shift lever 92. When this lever is shifted the powershift gear selection remains unchanged so that a shift of eight gears is effected with each shift of the lever. However, as subsequently described with respect to Figure 10, range shift logic may be provided for both the 4/5 shift lever and the High/Low shift lever.

The advantage of the change of mind logic may be appreciated by considering the following example. Assume that the transmission is in gear 8L, that is, the High/Low shift lever is in the low range, the 4/5 lever is in the 5 range, and powershift gear 4 is in effect. A shift of the 4/5 lever to the 4 range results in selection of gear 4L since the range shift logic selects the highest powershift gear when the 4/5 shift lever is shifted to the 4 range. Now, if the 4/5 shift lever is shifted back to the 5 range, the transmission is placed not in original gear 8L but instead enters gear 5L since the range shift logic selects powershift gear 1 when the 4/5 shift lever is shifted to the 5 range. Therefore, if an operator should shift the 4/5 shift lever from the 5 to the 4 range and then decide, before he releases the clutch pedal, that he wants to go back to the previous gear, the shift back to the 5 range results in a sudden unexpected change in speed. The change of mind logic prevents this by saving the powershift gear value in effect at the time the clutch pedal was last released, and if, while the clutch pedal is depressed, the 4/5 select lever is shifted and then returned to its previous position before the clutch pedal is released to or above the threshold point PCLUTCH THR, the saved powershift gear value is used.

In Fig. 8, if a shift from the 4 to 5 range is detected at step 800, the value OLD RANGE is tested at step 802 to see if it is equal to range 5. OLD RANGE is always reset to zero when the clutch pedal is released so during the first execution of the Range Shift routine after the pedal is depressed the test at step 802 proves false. At step 803 location OLD PS GEAR is set to the value in POWERSHIFT GEAR, POWERSHIFT GEAR is set to 1 and OLD RANGE is set to 4. An exit is made to the Creeper routine.

The next time (or times) the Range Shift routine is executed, and assuming no further shifting of the 4/5 shift lever only steps 805, 800 and 801 are executed and all tests prove false so nothing happens. If the operator releases the clutch pedal, as in a normal shift, the release of the clutch pedal is detected at step 805, OLD RANGE is reset at step 806 and the driveline is engaged in the new gear (5L) at step 504. On the other hand, if the operator should change his mind and move the 4/5 shift lever back to the 4 range before releasing the clutch, this second shift is detected at step 801. At step 807 OLD RANGE is tested to see if it is equal to 4. This value was set in OLD RANGE at step 803 so the test proves true and the routine branches to step 804 where OLD PS GEAR, the powershift gear value at the time of the clutch depression, is transferred to POWERSHIFT GEAR. Therefore, when the clutch pedal is released the same powershift gear that was in effect before the shift becomes the selected powershift gear.

A shift from the 5 to 4 range is accomplished in a similar manner, the primary difference being that OLD RANGE is set to 5 and POWERSHIFT GEAR is set to 4 at step 808.

The Creeper routine controls energization of the creeper solenoid 83 which controls engagement of the creeper gear 54. The Creeper routine also monitors the creeper solenoid current to provide for a safe and orderly disengagement or inhibiting of creeper gear operation when the monitored conditions indicate a failure or likelihood of failure. Actuation of the creeper switch contacts 170 is required to engage or disengage the creeper gear but the High/Low shift lever 92 must be positioned to select the low range and the clutch pedal must be depressed when the creeper switch is actuated.

At step 900 a test is made to see if the High/Low shift lever is set for the low range. If it is, the creeper switch contacts 170 are tested at step 901 and compared with the last sampling of the switch contacts to see if there has been a transition. If the creeper switch has been actuated, the output of the clutch pedal potentiometer 79 is tested at step 903 and if the clutch pedal is not depressed the creeper solenoid state remains unchanged and the program moves to step 906.

If the test at step 903 shows that the clutch pedal is depressed, a test is made at step 904 to see if the creeper solenoid is on or off. The test may be made by sampling a flag which is set when the creeper solenoid is turned on or reset when the solenoid is turned off. If the solenoid has been energized the program branches to step 902 to turn it off but if the solenoid has not been energized the program branches to step 905 to turn it on. Referring to Fig. 3, the creeper solenoid 83 is energized by turning on a transistor 181 so that a circuit is established from +12V through solenoid 83 and a resistor 184 to ground. The resistor is connected across the inputs of an amplifier 182. The output of amplifier 182 is tied to one of the A/D input channels of microprocessor 80. When solenoid 83 is energized, the output of amplifier 182 increases to some value determined by the magnitude of the current through the creeper solenoid and resistor 184. The analog output of amplifier 182 is digitized and compared with threshold values by means not shown to detect shorts, opens or out of range current in the creeper solenoid circuit.

A so-called "normal" start-up was described above wherein the ignition key is turned on while the tractor is stationary. Provision is also made for a "rolling reset" start- up. This might occur, for example, as a result of an intermittent or temporary power loss, transient electrical noise, engine stall or even the turning of the ignition key off and then on while the tractor is moving. In these situations it is desirable to re-engage the driveline in the same powershift gear that was in effect prior to the reset provided the positions of the 4/5 and High/Low shift levers have not changed. This eliminates unexpected gear and speed changes while the tractor is moving if the microprocessor is reset. It also allows a smooth recovery when a fault occurs because, without the provision for a rolling reset the automatic powershift gear selection made by the Initial Gear routine during normal start-ups would be in effect. The routine of Fig. 4B controls the rolling reset start-up as explained in above-referenced EP-A-0.517.420 and reference may be made to that application for a detailed description of the routine.

Fig. 10 shows an alternative routine which provides powershift gear selection if either a 4/5 or High/Low range shift, or both, occur during a single clutch depression. If both occur, the powershift gear selection is determined by the movement of the High/Low lever only.

In Fig. 10, the Range Shift routine begins at step 1000 by testing location OLD_RANGE for a value of zero. OLD_RANGE will contain a value of zero only if it is reset at step 606 or 607 because one of the powershift push-buttons 112, 114 is pressed. Assuming for the moment that OLD_RANGE=0̸ the routine jumps from step 1000 to step 1006 where OLD_RANGE is set to a value (RANGE) representing the present position of the 4/5 and High/Low shift levers 96 and 92. Step 1006 also saves POWERSHIFT GEAR at location OLD_PS_GEAR.

At step 1008 RANGE is compared to OLD_RANGE and since they were set equal to each other at step 1006 the equality test at step 1008 proves true. The value in OLD_PS_GEAR is returned to POWERSHIFT GEAR at step 1010 and an exit is made to the Creeper routine. Thus, if a powershift push-button 112 or 114 is pressed to change powershift gears, there is no change in the selected powershift gear during the first execution of the Range Shift routine following the pressing of the push-button.

Assuming no further actuation of the powershift push-buttons, the test at step 1000 will prove false the next time the Range Shift routine is executed because OLD_RANGE was set to a value other than zero the first time the routine was executed. Therefore, both the 4/5 and High/Low shift levers are tested at step 1002 to see if both of the levers are in gear, that is, neither is in its neutral position. If they are not both in gear the routine jumps to step 1008, executes step 1010 and exits to the Creeper routine.

If the test at step 1002 shows that both levers are in gear, the output of the clutch pedal potentiometer 79 is sampled at step 1004 to determine if the clutch pedal is released. Assuming the operator has not yet depressed the clutch pedal, the test at step 1004 proves true and again steps 1006, 1008 and 1010 are executed before an exit is made to the Creeper routine. On the other hand, if the clutch pedal is depressed the routine jumps from step 1004 to step 1008 and when the test at step 1008 proves true step 1010 is executed before an exit is made to the Creeper routine.

Assume now that the operator shifts either one or both of the 4/5 and High/Low shift levers while depressing the clutch pedal, both of the levers ending up in a position other than neutral. The test at step 1000 proves false, the test at step 1002 proves true, and the test at step 1004 proves false so the routine moves to step 1008. This time, when the microprocessor senses the shift lever positions and compares them with the former shift lever positions, as represented by the contents of OLD_RANGE, the test for equality proves false and the routine advances to step 1012.

The High/Low shift lever is tested at step 1012 to see if the lever has been shifted from high to low. This may be done by sampling the state of switch 160 (or 158) and comparing it with a saved previous sample. If the lever has been shifted, POWERSHIFT GEAR is set to 4 at step 1014. If the test at step 1012 proves false, the High/Low shift lever is tested at step 1016 to see if it has been shifted from the low to the high range. If it has, POWERSHIFT GEAR is set to 1 at step 1018.

If the High/Low shift lever has not been shifted from low to high, the test at step 1016 proves false and the program moves to step 1020 where the 4/5 shift lever is checked for a shift from the 4 to the 5 range. If such a shift has occurred, POWERSHIFT GEAR is set to 1 at step 1018.

If the test at step 1020 proves false, the 4/5 shift lever is tested at step 1022 for a shift from the 5 to the 4 range. If such a shift has occurred, POWERSHIFT GEAR is set to 4 at step 1014. On the other hand, if the test at step 1022 proves false an exit is made to the Creeper routine without changing POWERSHIFT GEAR.

Referring to Table I, assume that the transmission is in 5H and the High/Low shift lever 92 is shifted to the low position. With range shift logic as shown in Fig. 8, a shift would be made to gear 5L and the gear speed ratio would change from 1.16 to 3.60. On the other hand, with range shift logic as shown in Fig. 10, a similar shift of the High/Low shift lever would result in a shift from 5H (ratio 1.16) to 8L (ratio 1.97) thus giving a smaller change in tractor speed and a much smoother movement of the tractor. Like Fig. 8, the range shift procedure of Fig. 10 selects the lowest powershift gear when the new lever positions will select a higher gear range and selects the highest powershift gear when the new lever positions will select a lower gear range. However, the routine of Fig. 10 does this when either the High/Low or 4/5 shift lever is shifted while the routine of Fig. 8 does it only when the 4/5 shift lever is shifted. Both routines, in addition to reducing the speed change during range shifting, minimize wear of transmission components.

If the operator should depress the clutch pedal, shift either one or both of the 4/5 and High/Low shift levers, then change his mind and shift the levers back to their original positions before releasing the clutch pedal beyond the threshold point defined by PCLUTCH_THR, the routine of Fig. 10 will cause the powershift gear in effect before the shift to be in effect after the clutch pedal is released. At the time the clutch pedal is depressed, OLD_RANGE and OLD_PS_GEAR hold indications of the positions of the shift levers and the powershift gear in effect, these indications having been saved at step 1006 the last time that step was executed before the clutch pedal was depressed. While the clutch pedal is depressed below the point PCLUTCH_THR step 1006 is not executed so the indications are saved. When the operator shifts the shift levers back to the positions they held prior to clutch pedal depression, the test at step 1008 proves true. The indication in OLD_PS_GEAR is transferred back to POWERSHIFT GEAR at step 1010. Thus, when the clutch pedal is released the shift lever selection and powershift gear in effect prior to depression of the clutch pedal are the shift lever selection and powershift gear in effect when the pedal is released.

From the foregoing description it is seen that the present invention may provide controls for insuring that the gear speed ratio selected during a normal start-up is limited to the narrowest range possible given that the range select levers may have various conditions. The invention may also insure that after a microprocessor reset the transmission is returned to the same gear as before reset if the shift levers have not been moved. The invention may permit an operator to change his mind and shift back to a selected gear automatically if the range shift lever is shifted back to its original position before the clutch pedal is released.

The invention may also provide for an automatic, general matching of gear ratios when changing from one gear range to the next, and for de-energizing powershift clutches as a clutch pedal is depressed but before it reaches the fully depressed position.

The principles of the invention are applicable to different transmissions having different numbers of selectable gear speeds and more or less than two range shift levers.

## Claims

1. A method of selecting an initial gear at start-up in a transmission system having at least a first coupler (65) responsive to movement of a first range select lever (92) between first and second positions for selecting a first or a second range of gears, said second range of gears being higher than said first range, and a microprocessor (80) responsive to actuation of powershift switches (112, 114) for controlling a plurality of electro-hydraulic powershift clutches (C1-C4), thereby to select one of a plurality of powershift gears (34, 26, 37, 41) within the selected first or second range, and
characterized in that the method comprises the steps of :
- sensing the position of said first range select lever (92);
- sensing for a sequence of start-up conditions; and
- when said sequence of start-up conditions exists, energizing said powershift clutches (C1-C4) to select the lowest powershift gear if the first range select lever (92) is in said second position and energizing said powershift clutches (C1-C4) to select the highest powershift gear if the first range select lever (92) is in said first position.

2. A method according to claim 1 characterized in that the step of sensing for a sequence of start-up conditions comprises the step of sensing that an engine which drives the transmission is running.

3. A method according to claim 2 characterized in that the step of sensing for a sequence of start-up conditions further comprises the step of sensing that a clutch pedal transition has been made from a depressed position to a released position.

4. A method according to claim 2 characterized in that the step of sensing for a sequence of start-up conditions further comprises the step of sensing that a forward/reverse lever transition has been made from neutral to not-neutral.

5. A method according to any of the preceding claims for controlling a transmission having a second coupler (55) responsive to movement of a second range select lever (96) between first and second positions for selecting a range of gears within either said first or second range, characterized in that the method further comprises the steps of :
- sensing the position of the second range select lever (100); and
- when said sequence of start-up conditions exists, energizing said powershift clutches (C1-C4) to select the highest powershift gear if said first range select lever (92) and said second range select lever (96) are both in their respective first positions and energizing said powershift clutches to select the lowest powershift gear when said levers (92, 96) are in any other combination of positions.

6. A method according to claim 5 characterized in that said first and second range select levers (92, 96) both have a neutral position and the step of energizing said powershift clutches (C1-C4) is carried out only if neither of said range select levers (92, 96) is in its neutral position.

7. A method according to claim 4 and 6 or 5 when appended to claim 4 for controlling a transmission having a third coupler (25) responsive to movement of the forward/reverse control lever (100) for selecting forward or reverse drive of an output shaft (11) of said transmission characterized in that the method further comprises the steps of :
- driving said output shaft (11) in a forward direction at the selected powershift gear when said forward/reverse lever (100) selects forward drive; and
- driving said output shaft (11) in a reverse direction when said forward/reverse lever (100) selects reverse drive.

8. A transmission having at least a first coupler (65) responsive to movement of a first range select lever (92) between first and second positions for selecting a first or a second range of gears, said second range of gears being higher than said first range, and a microprocessor (80) responsive to actuation of powershift switches (112, 114) for controlling a plurality of electro-hydraulic powershift clutches (C1-C4), thereby to select one of a plurality of powershift gears (34, 26, 37, 41) within the selected first or second range; and
characterized in that the transmission further comprises apparatus for selecting an initial gear at start-up, said apparatus including :
- first means (158, 160, 80) for sensing the position of said first range select lever (92);
- second means (79, 154, 156, 80) for sensing for a sequence of start-up conditions; and
- third means (80) responsive to said first and second means and operative when said sequence of start-up conditions exists for controlling said powershift clutches (C1-C4) to select the lowest powershift gear if said first range select lever (92) is in said second position and controlling said powershift clutches to select the highest powershift gear if the range select lever is in said first position.

9. A transmission according to claim 8 characterized in that the second means (79, 154, 156, 80) comprises means (80) for sensing that an engine which drives the transmission is running.

10. A transmission according to claim 8 or 9 characterized in that the second means (79, 154, 156, 80) further comprises means for sensing that a clutch pedal (78) has made a transition from a depressed position to a released position.

11. A transmission according to claim 9 or 10 characterized in that the second means (79, 154, 156, 80) further comprises means for sensing that a forward/reverse lever (100) has made a transition from neutral to not-neutral.

12. A transmission according to any of the claims 8 to 11 for controlling a transmission having a second coupler (55) responsive to movement of a second range select lever (96) between first and second positions for selecting a range of gears within either said first or second range, characterized in that the apparatus further comprises :
- fourth means (162, 164) for sensing the position of the second range select lever (100); and
- said third means being responsive to said first (158, 160, 80), second (79, 154, 156, 80) and fourth means (162, 164) for controlling said powershift clutches (C1-C4) to select the highest powershift gear if said first range select lever (92) and said second range select lever (96) are both in their respective first positions and controlling said powershift clutches to select the lowest powershift gear when said levers (92, 96) are in any other combination of positions.

13. A transmission according to claim 12 characterized in that said first and second range select levers (92, 96) both have a neutral position and said powershift clutches (C1-C4) are energized only if neither of said range select levers (92, 96) is in its neutral position.

14. A transmission according to claim 11 to 13 for controlling a transmission having a third coupler (25) responsive to movement of the forward/reverse control lever (100) for selecting forward or reverse drive of an output shaft (11) of said transmission characterized in that the apparatus further comprises :
- means for driving said output shaft (11) in a forward direction at the selected powershift gear when said forward/reverse lever (100) selects forward drive; and
- means for driving said output shaft (11) in a reverse direction when said forward/reverse lever (100) selects reverse drive.

15. A method of controlling a transmission system having at least a first coupler (65) responsive to movement of a first range select lever (92) between first and second positions for selecting a first or a second range of gears, said second range of gears being higher than said first range, and a microprocessor (80) responsive to actuation of powershift switches (112, 114) for controlling a plurality of electro-hydraulic powershift clutches (C1-C4), thereby to select one of a plurality of powershift gears (34, 26, 37, 41) within the selected first or second range, and
characterized in that the method comprises the steps of :
- detecting a shift of said first range select lever (92) from one of said positions to the other; and
- energizing said powershift clutches (C1-C4) to select the lowest powershift gear when said first range select lever (92) is shifted from said first to said second position and energizing said powershift clutches (C1-C4) to select the highest powershift gear when said first range select lever (92) is shifted from said second to said first position.

16. A method according to claim 15 for controlling a transmission having a second coupler (55) coupled to a second range shift lever (96) movable between first and second positions for selecting a low or a high range of gears in either said first or said second range, characterized in that the method comprises the further steps of:
- detecting a shift of said second range shift lever (96) from one of its positions to the other;
- generating signals to energize said powershift clutches (C1-C4) to select the lowest powershift gear when said second range shift lever (96) is shifted from its first to its second position and the highest powershift gear when said second range shift lever (96) is shifted from its second to its first position; and,
- inhibiting generation of signals according to movement of said second range shift lever if both of said range shift levers (92,96) are shifted during a single depression of a clutch pedal (78); the clutch pedal (78) being movable between a depressed position and a released position for controlling the flow of hydraulic fluid to said powershift clutches (C1-C4).

17. A method according to claim 15 or 16 and comprising the further steps of:
- sensing the position of the first range select lever (92);
- sensing for a sequence of start-up conditions; and,
- when said sequence of start-up conditions exists, energizing said powershift clutches (C1-C4) to select the lowest powershift gear if the first range select lever (92) is in said second position and energizing said powershift clutches (C1-C4) to select the highest powershift gear if the range select lever is in said first position.

18. A method according to claim 17 characterized in that the step of sensing for a sequence of start-up conditions comprises sensing that an engine which drives the transmission is running and sensing that a clutch pedal (78) transition has been made from a depressed position to a released position.

19. A method according to claim 17 characterized in that the step of sensing for a sequence of start-up conditions comprises sensing that an engine which drives the transmission is running, and sensing that a forward/reverse lever (100) transition has been made from neutral to not-neutral.

20. A method according to claim 16, or any of the claims 17 to 19 when appended thereto, and further comprising the steps of:
- sensing the position of the second range select lever (100);
- when said sequence of start-up conditions exists, energizing said powershift clutches (C1-C4) to select the highest powershift gear if said first range select lever (92) and said second range select lever (96) are both in their respective first positions and energizing said powershift clutches to select the lowest powershift gear when said levers are in any other combination of positions.

21. A method according to claim 19 characterized in that said first range select lever (92) and said second range select lever (96) both have a neutral position and the step of energizing said powershift clutches (C1-C4) is carried out only if neither said first range select lever (92) or said second range select lever (96) is in its neutral position.

22. A method according to claim 16 or 17 to 21 when appended thereto characterized in that the method further comprises the step of preventing a shift from one powershift gear to another when said second range shift lever (96) is shifted from one of its positions to the other but is returned to its previous position before the clutch pedal (78) is released.

23. A method according to any of claims 1 to 7 and 15 to 22 wherein the transmission system includes an electrically-actuated creeper mechanism (70), characterized in that the method comprises the further steps of:
- monitoring the current flow through the creeper actuator as the actuator is energized to engage the coupler (15) to determine if said current is within first and second limits; and
- terminating said current flow to the actuator if the monitored current flow is not within said limits.

24. A transmission having at least a first coupler (65) responsive to movement of a first range shift lever (92) between first and second positions for selecting a first or a second range of gears, the second range of gears being higher than said first range, a microprocessor (80) responsive to actuation of powershift switches (112,114) for energizing a plurality of electro-hydraulic powershift clutches (C1-C4), thereby to select one powershift gear (34, 26, 37, 41) within the selected first or second range; and
characterized in that the transmission further comprises :
- first means (158, 160, 80) for detecting a shift of the first range select lever (92) from one of said positions to the other; and,
- second means (80) responsive to said first means for generating signals to energize said powershift clutches (C1-C4) to select the lowest powershift gear when said first range shift lever (92) is shifted from said first to said second position and the highest powershift gear when said first range shift lever (92) is shifted from said second to said first position.

25. A system according to claim 24 characterized in that said lowest and highest powershift gears are separated by at least one other powershift gear.

26. A system according to claims 24 and 25 and further including a second coupler (55) responsive to movement of a second range shift lever (96) between first and second positions for selecting a low or a high range of gears in either said first or said second range, characterized in that the transmission further comprises :
- third means (80) for sensing the position of said second range shift lever (96);
- fourth means (162, 164) responsive to said third means for detecting a shift of said second range shift lever (96) from one of its positions to the other;
- fifth means (80) responsive to said fourth means for generating signals to energize said powershift clutches to select the lowest powershift gear when said second range shift lever (96) is shifted from its first to its second position and the highest powershift gear when said second range shift lever (96) is shifted from its second to its first position; and,
- means (80) responsive to said first means for inhibiting said fifth means if both of said range shift levers (92,96) are shifted during a single depression of a clutch pedal (78); the clutch pedal (78) being movable between a depressed position and a released position for controlling the flow of hydraulic fluid to said powershift clutches (C1-C4).

27. A system according to claims 24 to 26 and further including apparatus for selecting an initial gear at start-up, characterised in that said apparatus comprises :
- first means (158, 160, 80) for sensing the position of the first range select lever (92);
- second means (79, 154, 156, 80) for sensing for a sequence of start-up conditions; and,
- third means (80) responsive to said first and second means and operative when said sequence of start-up conditions exists for controlling said powershift clutches (C1-C4) to select the lowest powershift gear if the first range select lever (92) is in said second position and controlling said powershift clutches (C1-C4) to select the highest powershift gear if the first range select lever (92) is in said first position.

28. A transmission according to claim 27 characterized in that the second means (79, 154, 156, 80) comprises means (80) for sensing that an engine which drives the transmission is running, and means for sensing that a clutch pedal (78) has made a transition from a depressed position to a released position.

29. A transmission according to claim 27 characterized in that the second means (79, 154, 156, 80) comprises means (80) for sensing that an engine which drives the transmission is running, and means for sensing that a forward/reverse lever (100) transition has been made from neutral to not-neutral.

30. A transmission according to claim 26 and any of the claims 27 to 29 when appended thereto characterized in that said apparatus further comprises :
- fourth means (162, 164, 80) for sensing the position of the second range select lever (96);
- said third means being responsive to said first, second and fourth means for controlling said powershift clutches (C1-C4) to select the highest powershift gear if said first range select lever (92) and said second range select lever (96) are both in their respective first positions, and controlling said powershift clutches to select the lowest powershift gear when said levers (92, 96) are in any other combination of positions.

31. A transmission according to any of the claims 8 to 14 and 24 to 30 characterized in that the transmission further comprises :
- a creeper mechanism (70) including a coupler (15) engageable to reduce the ratio of output shaft speed relative to input shaft speed for a selected gear;
- a clutch pedal (78) and a clutch pedal sensor (79);
- a creeper switch (170);
- a shift lever sensor (80) for sensing the position of the shift lever (92); and,
- means (80) responsive to said shift lever sensor, the clutch pedal sensor and the creeper switch for energizing and de-energizing the creeper mechanism when the creeper switch is actuated if the shift lever is selecting a low range of gears and the clutch pedal is depressed.

32. A transmission according to claims 12 and 26 characterized in that the powershift switches (112,114) are located on the second lever (96) for selectively controlling actuation of said powershift clutches (C1-C4); the switches (112, 114) being located in a position permitting an operator to shift the lever (96) and operate the switches (112, 114) without removing a hand from the shift lever (96).

33. A transmission according to any of the claims 8 to 14 and 24 to 32 for controlling the transmission of torque from an input shaft (10) to an output shaft (11); characterized in that said transmission system includes :
- a plurality of electro-hydraulic powershift clutches (C1,C2,C3,C4) which, together with a coupler (55), select a gear speed ratio between said input and output shafts, at least one of said powershift clutches (C1,C2) being located between the coupler and the input shaft whereby said coupler is selectively driven through said one powershift clutch;
- a dump valve (S3) through which hydraulic fluid is applied to or released from said powershift clutches;
- a clutch pedal (78), which when in a fully depressed position, permits synchronized shifting of the coupler;
- means (79) for sensing that the clutch pedal has been depressed at least as far as a threshold point, the threshold point being between a released position and the fully depressed position; and,
- means (80) responsive to the sensing means (79) for controlling the dump valve to release fluid from the powershift clutches as the clutch pedal is depressed past the threshold point.

34. A transmission according to claim 33, characterized in that the threshold point is separated from the fully depressed position by about 12% of the distance between the released position and the fully depressed position of the clutch pedal (78).

35. A transmission according to claims 33 or 34, characterized in that at least a second of the powershift clutches (C3,C4) is located between the coupler (55) and the output shaft (11) so as to be selectively driven through the coupler.

36. A transmission according to claim 35 characterized in that the coupler (55) is shiftable to drive the second powershift clutch (C3,C4) in a forward or a reverse direction.

37. A transmission according to claims 35 or 36 characterized in that the coupler (65) is shiftable to drive the second powershift clutch (C3,C4) at a first or a second speed relative to the first powershift clutch (C1,C2).

38. A transmission according to any of the claims 33 to 37 characterized in that the transmission further comprises another shiftable coupler (25) located between said first and second powershift clutches (C1,C2;C3,C4), said other coupler being shiftable to drive the second powershift clutch (C3,C4) in a forward or a reverse direction.

## Patentansprüche

1. Verfahren zur Auswahl eines anfänglichen Ganges beim Anlassen in einem Getriebesystem, das zumindestens einen ersten Koppler (65), der auf eine Bewegung eines ersten BereichsAuswahlhebels (62) zwischen ersten und zweiten Stellungen anspricht, um einen ersten und zweiten Bereich von Gängen auszuwählen, wobei der zweite Bereich von Gängen höher als der erste Bereich ist, und einen Mikroprozessor (80) aufweist, der auf die Betätigung von Servo-Schaltgang-Schaltern (112, 114) anspricht, um eine Anzahl von elektrohydraulischen Servoschaltkupplungen (C1 - C4) zu steuern, um auf diese Weise einen einer Anzahl von Servo-Schaltgängen (34, 26, 37, 41) in einem ausgewählten ersten oder zweiten Bereich auszuwählen,
dadurch gekennzeichnet, daß das Verfahren die folgenden Schritte umfaßt:
- Feststellen der Position des ersten Bereichsauswahlhebels (92),
- Feststellen einer Folge von Anlaßbedingungen, und
- wenn diese Folge von Anlaßbedingungen vorliegt, Ansteuern der Servo-Schaltkupplungen (C1 - C4) zur Auswahl des niedrigsten Servo-Schaltganges, wenn der erste Bereichsauswahlhebel (92) sich in seiner zweiten Stellung befindet, und Ansteuern der Servo-Schaltkupplungen (C1 - C4) zur Auswahl des höchsten Servo-Schaltganges, wenn der erste Bereichsauswahlhebel (92) sich in der ersten Stellung befindet.

2. Verfahren nach Anspruch 1,
dadurch gekennzeichnet, daß der Schritt der Feststellung einer Folge von Anlaßbedingungen den Schritt der Feststellung umfaßt, daß ein Motor, der das Getriebe antreibt, läuft.

3. Verfahren nach Anspruch 2,
dadurch gekennzeichnet, daß der Schritt der Feststellung einer Folge von Anlaßbedingungen weiterhin den Schritt der Feststellung umfaßt, ob ein Übergang der Stellung eines Kupplungspedals von einer niedergedrückten Stellung auf eine losgelassene Stellung erfolgt ist.

4. Verfahren nach Anspruch 2,
dadurch gekennzeichnet, daß der Schritt der Feststellung einer Folge von Anlaßbedingungen weiterhin den Schritt der Feststellung umfaßt, ob ein Übergang in der Stellung eines Vorwärts-/ Rückwärts-Hebels von der Neutralstellung in eine von einer Neutralstellung abweichende Stellung erfolgt ist.

5. Verfahren nach einem der vorhergehenden Ansprüche zur Steuerung eines Getriebes, das einen zweiten Koppler (55) aufweist, der auf die Bewegung eines zweiten Bereichsauswahlhebels (96) zwischen ersten und zweiten Stellungen anspricht, um einen Bereich von Gängen in entweder dem ersten oder dem zweiten Bereich auszuwählen,
dadurch gekennzeichnet, daß das Verfahren weiterhin die folgenden Schritte umfaßt:
- Feststellen der Position des zweiten Bereichsauswahlhebels (100), und
- wenn die Folge von Anlaßbedingungen vorliegt, Ansteuern der Servo-Schaltkupplungen (C1 - C4) zur Auswahl des höchsten Servo-Schaltganges, wenn sich sowohl der erste Bereichsauswahlhebel (92) als auch der zweite Bereichsauswahlhebel (96) in ihren jeweiligen ersten Stellungen befinden, und Ansteuern der Servo-Schaltkupplungen zur Auswahl des niedrigsten Servo-Schaltganges, wenn sich die Hebel (92, 96) in irgendeiner anderen Kombination von Stellungen befinden.

6. Verfahren nach Anspruch 5,
dadurch gekennzeichnet, daß die ersten und zweiten Bereichsauswahlhebel (92, 96) beide eine Neutralstellung aufweisen, und daß der Schritt der Ansteuerung der Servo-Schaltkupplungen (C1 - C4) nur dann ausgeführt wird, wenn sich keiner der Bereichsauswahlhebel (92, 96) in seiner Neutralstellung befindet.

7. Verfahren nach Anspruch 4 und 6 oder 5 unter Rückbeziehung auf Anspruch 4, zur Steuerung eines Getriebes, das einen dritten Koppler (25) aufweist, der auf eine Bewegung des Vorwärts-/Rückwärts-Steuerhebels (100) anspricht, um einen Vorwärts- oder Rückwärts-Antrieb einer Abtriebswelle (11) des Getriebes auszuwählen,
dadurch gekennzeichnet, daß das Verfahren weiterhin die folgenden Schritte umfaßt:
- Antreiben der Abtriebswelle (11) in einer Vorwärtsrichtung mit dem ausgewählten Servo-Schaltgang, wenn der Vorwärts-/Rückwärts-Hebel (100) den Vorwärtsantrieb auswählt, und
- Antreiben der Abtriebswelle (11) in einer Rückwärtsrichtung, wenn der Vorwärts-/Rückwärts-Hebel (100) den Rückwärtsantrieb auswählt.

8. Getriebe mit zumindestens einem ersten Koppler (65), der auf die Bewegung eines ersten Bereichsauswahlhebels (92) zwischen ersten und zweiten Stellungen anspricht, um einen ersten oder zweiten Bereich von Gängen auszuwählen, wobei der zweite Bereich von Gängen höher als der erste Bereich ist, und mit einem Mikroprozessor (80), der auf die Betätigung von Servo-Schaltgang-Schaltern (112, 114) anspricht, um eine Vielzahl von elektrohydraulischen Servo-Schaltkupplungen (C1 - C4) zu steuern, um auf diese Weise einen eine Vielzahl von Servo-Schaltgängen (34, 26, 37, 41) in dem ausgewählten ersten oder zweiten Bereich auszuwählen,
dadurch gekennzeichnet, daß das Getriebe weiterhin eine Vorrichtung zur Auswahl eines anfänglichen Ganges beim Anlassen aufweist, wobei die Vorrichtung folgende Teile einschließt:
- eine erste Einrichtung (158, 160, 180) zur Feststellung der Position des ersten Bereichsauswahlhebels (92),
- eine zweite Einrichtung (79, 154, 156, 80) zur Feststellung einer Folge von Anlaßbedingungen, und
- eine dritte Einrichtung (80), die auf die ersten und zweiten Einrichtungen anspricht und bei Vorliegen der Folge von Anlaßbedingungen betreibbar ist, um die Servo-Schaltkupplungen (C1 - C4) derart zu steuern, daß der niedrigste Servo-Schaltgang ausgewählt wird, wenn sich der erste Bereichauswahlhebel (92) in der zweiten Stellung befindet, und um die Servo-Schaltkupplungen so zu steuern, daß sie den höchsten Servo-Schaltgang auswählen, wenn sich der Bereichsauswahlhebel in seiner ersten Stellung befindet.

9. Getriebe nach Anspruch 8,
dadurch gekennzeichnet, daß die zweite Einrichtung (79, 154, 156, 80) Einrichtungen (80) umfaßt, die feststellen, ob ein Motor, der das Getriebe antreibt, läuft.

10. Getriebe nach Anspruch 8 oder 9,
dadurch gekennzeichnet, daß die zweite Einrichtung (79, 154, 156, 80) weiterhin Einrichtungen zur Feststellung umfaßt, ob ein Kupplungspedal (78) einen Übergang von einer niedergedrückten Stellung auf eine losgelassene Stellung ausgeführt hat.

11. Getriebe nach Anspruch 9 oder 10,
dadurch gekennzeichnet, daß die zweite Einrichtung (79, 154, 156, 80) weiterhin Einrichtungen umfaßt, die feststellen, ob ein Vorwärts-/Rückwärts-Hebel (100) einen Übergang von einer neutralen Stellung zu einer von der Neutralstellung abweichenden Stellung ausgeführt hat.

12. Getriebe nach einem der Ansprüche 8 bis 11 zur Steuerung eines Getriebes mit einem zweiten Koppler (55), der auf eine Bewegung eines zweiten Bereichsauswahlhebels (96) zwischen ersten und zweiten Stellungen anspricht, um einen Bereich von Gängen in entweder dem ersten oder dem zweiten Bereich auszuwählen,
dadurch gekennzeichnet, daß die Vorrichtung weiterhin:
- eine vierte Einrichtung (162, 164) zur Feststellung der Position des zweiten Bereichsauswahlhebels (100) umfaßt, und
- wobei die dritte Einrichtung auf die ersten (158, 160, 80), zweiten (79, 154, 156, 180) und vierten Einrichtungen (162, 164) anspricht, um die Servo-Schaltkupplungen (C1 - C4) so zu steuern, daß der höchste Servo-Schaltgang ausgewählt wird, wenn sich sowohl der erste Bereichsauswahlhebel (92) als auch der zweite Bereichsauswahlhebel (96) in ihren jeweiligen ersten Stellungen befinden, und um die Servo-Schaltkupplungen so zu steuern, daß der niedrigste Servo-Schaltgang ausgewählt wird, wenn sich die Hebel (92, 96) in irgendeiner anderen Kombination von Stellungen befinden.

13. Getriebe nach Anspruch 12,
dadurch gekennzeichnet, daß die ersten und zweiten Bereichsauswahlhebel (92, 96) beide eine Neutralstellung aufweisen, und daß die Servo-Schaltkupplungen (C1 - C4) lediglich dann angesteuert werden, wenn sich keiner der Bereichsauswahlhebel (92, 96) in seiner Neutralstellung befindet.

14. Getriebe nach Anspruch 11 - 13 zur Steuerung eines Getriebes mit einem dritten Koppler (25), der auf eine Bewegung des Vorwärts-/Rückwärts-Steuerhebels (100) anspricht, um einen Vorwärts- oder Rückwärts-Antrieb einer Abtriebswelle (11) des Getriebes auszuwählen,
dadurch gekennzeichnet, daß die Vorrichtung weiterhin folgende Teile umfaßt:
- eine Einrichtung zum Antreiben der Abtriebswelle (11) in einer Vorwärtsrichtung mit dem ausgewählten Servo-Schaltgang, wenn der Vorwärts-/Rückwärtshebel (100) einen Vorwärtsantrieb auswählt, und
- eine Einrichtung zum Antreiben der Abtriebswelle (11) in einer Rückwärtsrichtung, wenn der Vorwärts-/Rückwärts-Hebel (100) einen Rückwärtsantrieb auswählt.

15. Verfahren zur Steuerung eines Getriebesystems mit zumindestens einem ersten Koppler (65), der auf eine Bewegung eines ersten Bereichsauswahlhebels (92) zwischen ersten und zweiten Stellungen anspricht, um einen ersten oder einen zweiten Bereich von Gängen auszuwählen, wobei der zweite Bereich von Gängen höher als der erste Bereich ist, und mit einem Mikroprozessor (80), der auf die Betätigung von Servo-Schaltgang-Schalt ern (112, 114) anspricht, um eine Vielzahl von elektrohydraulischen Servo-Schaltkupplungen (C1 - C4) zu steuern, um auf diese Weise einen einer Vielzahl von Servo-Schaltgängen (34, 26, 37, 41) in dem ausgewählten ersten oder zweiten Bereich auszuwählen,
dadurch gekennzeichnet, daß das Verfahren die folgenden Schritte umfaßt:
- Feststellen einer Verschiebung des ersten Bereichsauswahlhebels (92) von einer der Stellungen auf die andere, und
- Ansteuern der Servo-Schaltkupplungen (C1 - C4) zur Auswahl des niedrigsten Servo-Schaltganges, wenn der erste Bereichsauswahlhebel (92) von der ersten auf die zweite Stellung verschoben wird, und Ansteuern der Servo-Schaltkupplungen (C1 - C4) zur Auswahl des höchsten Servo-Schaltganges, wenn der erste Bereichsauswahlhebel (92) von der zweiten auf die erste Stellung verschoben wird.

16. Verfahren nach Anspruch 15 zur Steuerung eines Getriebes mit einem zweiten Koppler (55), der mit einem zweiten Bereichsschalthebel (96) gekoppelt ist, der zwischen ersten und zweiten Stellungen zur Auswahl eines niedrigen oder hohen Bereiches von Gängen in sowohl dem ersten als auch dem zweiten Bereich beweglich ist,
dadurch gekennzeichnet, daß das Verfahren die weiteren folgenden Schritte umfaßt:
- Feststellen einer Verschiebung des zweiten Bereichsschalthebels (96) von einer seiner Stellungen zur anderen,
- Erzeugen von Signalen zur Ansteuerung der Servo-Schaltkupplungen (C1 - C4) zur Auswahl des niedrigsten Servo-Schaltganges, wenn der zweite Bereichsschalthebel (96) von seiner ersten zu seiner zweiten Stellung verschoben wird, und des höchsten Servo-Schaltganges, wenn der zweite Bereichsschalthebel (96) von seiner zweiten auf seine erste Stellung verschoben wird, und
- Sperren der Erzeugung von Signalen entsprechend der Bewegung des zweiten Bereichsschalthebels, wenn beide Bereichsschalthebel (92, 96) während eines einzigen Niederdrückens eines Kupplungspedals (78) verschoben werden, wobei das Kupplungspedal (78) zwischen einer niedergedrückten Stellung und einer losgelassenen Stellung bewegbar ist, um die Strömung von Hydraulikflüssigkeit an die Servo-Schaltkupplungen (C1 - C4) zu steuern.

17. Verfahren nach Anspruch 15 oder 16, das die weiteren folgenden Schritte umfaßt:
- Feststellen der Position des ersten Bereichsauswahlhebels (92),
- Feststellen einer Folge von Anlaßbedingungen, und
- bei Vorliegen der Folge von Anlaßbedingungen, Ansteuern der Servo-Schaltkupplungen (C1 - C4) zur Auswahl des niedrigsten Servo-Schaltganges, wenn sich der erste Bereichsauswahlhebel (92) in seiner zweiten Stellung befindet, und Ansteuern der Servo-Schaltkupplungen (C1 - C4) zur Auswahl des höchsten Servo-Schaltganges, wenn sich der Bereichsauswahlhebel in seiner ersten Stellung befindet.

18. Verfahren nach Anspruch 17,
dadurch gekennzeichnet, daß der Schritt der Feststellung einer Folge von Anlaßbedingungen die Feststellung, ob ein Motor, der das Getriebe antreibt, läuft, und die Feststellung umfaßt, ob ein Übergang eines Kupplungspedals (78) von einer niedergedrückten Stellung auf eine losgelassene Stellung erfolgt ist.

19. Verfahren nach Anspruch 17,
dadurch gekennzeichnet, daß der Schritt der Feststellung einer Folge von Anlaßbedingungen die Feststellung, ob ein Motor, der das Getriebe antreibt, läuft, und die Feststellung umfaßt, ob ein Übergang eines Vorwärts-/Rückwärts-Hebels (100) von einer Neutralstellung auf eine von der Neutralstellung abweichende Stellung erfolgt ist.

20. Verfahren nach Anspruch 16 oder einem der Ansprüche 17 bis 19 unter Rückbeziehung hierauf, das weiterhin die folgenden Schritte umfaßt:
- Feststellen der Position eines zweiten Bereichsauswahlhebels (100),
- wenn die Folge von Anlaßbedingungen vorliegt, Ansteuern der Servo-Schaltkupplungen (C1 - C4) zur Auswahl des höchsten Servo-Schaltganges, wenn sich sowohl der erste Bereichsauswahlhebel (92) als auch der zweite Bereichsauswahlhebel (96) in den jeweiligen ersten Stellungen befindet, und Ansteuern der Servo-Schaltkupplungen zur Auswahl des niedrigsten Servo-Schaltganges, wenn sich die Hebel in irgendeiner anderen Kombination von Stellungen befinden.

21. Verfahren nach Anspruch 19,
dadurch gekennzeichnet, daß der erste Bereichsauswahlhebel (92) und der zweite Bereichsauswahlhebel (96) beide eine Neutralstellung aufweisen, und daß der Schritt der Ansteuerung der Servo-Schaltkupplungen (C1 - C4) nur dann ausgeführt wird, wenn sich weder der erste Bereichsauswahlhebel (92) noch der zweite Bereichsauswahlhebel (96) in seiner Neutralstellung befindet.

22. Verfahren nach Anspruch 16 oder 17 bis 21 unter Rückbeziehung hierauf,
dadurch gekennzeichnet, daß das Verfahren weiterhin den Schritt des Verhinderns eines Schaltens von einem Servo-Schaltgang zu einem anderen umfaßt, wenn der zweite Bereichsschalthebel (96) von einer seiner Stellungen auf die andere verschoben wird, jedoch auf die vorhergehende Stellung zurückbewegt wird, bevor das Kupplungspedal (78) losgelassen wird.

23. Verfahren nach einem der Ansprüche 1 bis 7 und 15 bis 21, bei dem das Getriebesystem einen elektrisch betätigten Kriechgangmechanismus (70) einschließt,
dadurch gekennzeichnet, daß das Verfahren die folgenden weiteren Schritte umfaßt:
- Überwachen des Stromflusses durch das Kriechgang-Stellglied, wenn das Stellglied angesteuert wird, um den Koppler (15) einzukuppeln, um festzustellen, ob sich der Strom innerhalb erster und zweiter Grenzwerte befindet, und
- Beenden des Stromflusses an das Stellglied, wenn der überwachte Stromfluß nicht innerhalb der Grenzen liegt.

24. Getriebe mit zumindestens einem ersten Koppler (65), der auf eine Bewegung eines ersten Bereichsschalthebels (92) zwischen ersten und zweiten Stellungen anspricht, um einen ersten oder zweiten Bereich von Gängen auszuwählen, wobei der zweite Bereich von Gängen höher als der erste Bereich ist, mit einem Mikroprozessor (80), der auf die Betätigung von Servo-Schaltgang-Schaltern (112, 114) anspricht, um eine Vielzahl von elektrohydraulischen Servo-Schaltkupplungen (C1 - C4) anzusteuern, um auf diese Weise einen Servo-Schaltgang (34, 26, 37, 41) in dem ausgewählten ersten oder zweiten Bereich auszuwählen,
dadurch gekennzeichnet, daß das Getriebe weiterhin folgende Teile umfaßt:
- eine erste Einrichtung (158, 160, 80) zur Feststellung einer Verschiebung des ersten Bereichsauswahlhebels (92) von einer der Stellungen auf die andere, und
- eine zweite Einrichtung (80), die auf die ersten Einrichtungen anspricht, um die Servo-Schaltkupplungen (C1 - C4) so anzusteuern, daß sie den niedrigsten Servo-Schaltgang auswählen, wenn der erste Bereichsschalthebel (92) von der ersten auf die zweite Stellung verschoben wird, während sie den höchsten Servo-Schaltgang auswählen, wenn der erste Bereichsschalthebel (92) von der zweiten auf die erste Stellung verschoben wird.

25. System nach Anspruch 24,
dadurch gekennzeichnet, daß der niedrigste und der höchste Servo-Schaltgang durch zumindestens einen weiteren Servo-Schaltgang getrennt sind.

26. System nach Anspruch 24, und 25, das weiterhin einen zweiten Koppler (55) einschließt, der auf eine Bewegung eines zweiten Bereichsschalthebels (96) zwischen ersten und zweiten Stellungen anspricht, um einen niedrigen oder einen hohen Bereich von Gängen im entweder dem ersten oder dem zweiten Bereich auszuwählen,
dadurch gekennzeichnet, daß das Getriebe weiterhin folgende Teile umfaßt:
- eine dritte Einrichtung (80) zur Feststellung der Position des zweiten Bereichsschalthebels (96),
- eine vierte Einrichtung (162, 164), die auf die dritte Einrichtung anspricht, um eine Verschiebung des zweiten Bereichsschalthebels (96) von einer seiner Positionen auf die andere festzustellen,
- eine fünfte Einrichtung (80), die auf die vierte Einrichtung anspricht, um Signale zur Ansteuerung der Servo-Schaltkupplungen derart zu erzeugen, daß der niedrigste Servo-Schaltgang ausgewählt wird, wenn der zweite Bereichsschalthebel (96) von seiner ersten auf seine zweite Stellung verschoben wird, während der höchste Servo-Schaltgang ausgewählt wird, wenn der zweite Bereichsschalthebel (96) von seiner zweiten auf die erste Stellung verschoben wird, und
- auf die erste Einrichtung ansprechende Einrichtungen (80) zur Sperrung der fünften Einrichtung, wenn beide Bereichsschalthebel (92, 96) während eines einzigen Niederdrückens eines Kupplungspedals (78) verschoben werden, wobei das Kupplungspedal (78) zwischen einer niedergedrückten Stellung und einer losgelassenen Stellung beweglich ist, um die Strömung von Hydraulikflüssigkeit an die Servo-Schaltkupplungen (C1 - C4) zu steuern.

27. System nach den Ansprüchen 24, bis 26, das weiterhin eine Vorrichtung zur Auswahl eines anfänglichen Ganges beim Anlassen einschließt,
dadurch gekennzeichnet, daß die Vorrichtung folgende Teile umfaßt:
- eine erste Einrichtung (158, 160, 80) zur Feststellung der Stellung des ersten Bereichsauswahlhebels (92),
- eine zweite Einrichtung (79, 154, 156, 80) zur Feststellung einer Folge von Anlaßbedingungen, und
- eine dritte Einrichtung (80), die auf die ersten und zweiten Einrichtungen anspricht und bei Vorliegen der Folge von Anlaßbedingungen betreibbar ist, um die Servo-Schaltkupplungen (C1 - C4) zur Auswahl des niedrigsten Servo-schaltganges anzusteuern, wenn sich der erste Bereichsauswahlhebel (92) in seiner zweiten Stellung befindet, und um die Servo-Schaltkupplungen (C1 - C4) so anzusteuern, daß der höchste Servo-Schaltgang ausgewählt wird, wenn sich der erste Bereichsauswahlhebel (92) in seiner ersten Stellung befindet.

28. Getriebe nach Anspruch 27,
dadurch gekennzeichnet, daß die zweite Einrichtung (79, 154, 156, 80) Einrichtungen zur Feststellung, ob ein das Getriebe antreibender Motor läuft, und Einrichtungen umfaßt, die feststellen, ob ein Kupplungspedal (78) einen Übergang von einer niedergedrückten Stellung auf eine losgelassene Stellung ausgeführt hat.

29. Getriebe nach Anspruch 27,
dadurch gekennzeichnet, daß die zweite Einrichtung (79, 154, 156, 80) Einrichtungen (80) zur Feststellung, ob ein das Getriebe antreibender Motor läuft, und Einrichtungen umfaßt, die feststellen, ob ein Übergang eines Vorwärts-/Rückwärts-Hebels (100) von einer Neutralstellung auf eine von der Neutralstellung abweichende Stellung erfolgt ist.

30. Getriebe nach Anspruch 26 und einem der Ansprüche 27 bis 29 unter Rückbeziehung hierauf,
dadurch gekennzeichnet, daß die Vorrichtung weiterhin
- eine vierte Einrichtung (162, 164, 80) zur Feststellung der Stellung des zweiten Bereichsauswahlhebels (96) umfaßt,
- wobei die dritte Einrichtung auf die ersten, zweiten zweiten und vierten Einrichtungen anspricht, um die Servo-Schaltkupplungen (C1 - C4) so anzusteuern, daß der höchste Servo-Schaltgang ausgewählt wird, wenn sich sowohl der erste Bereichsauswahlhebel (92) als auch der zweite Bereichsauswahlhebel (96) in den jeweiligen ersten Stellungen befindet, und um die Servo-Schaltkupplungen so zu steuern, daß der niedrigste Servo-Schaltgang ausgewählt wird, wenn sich die Hebel (92, 96) in irgendeiner anderen Kombination von Stellungen befinden.

31. Getriebe nach einem der Ansprüche 8 bis 14 und 24 bis 30,
dadurch gekennzeichnet, daß das Getriebe weiterhin folgende Teile umfaßt:
- einen Kriechgangmechanismus (70), der einen Koppler (15) einschließt, der zur Verringerung des Verhältnisses der Abtriebswellendrehzahl gegenüber der Antriebswellendrehzahl für einen ausgewählten Gang einkuppelbar ist,
- ein Kupplungspedal (78) und einen Kupplungspedal-Sensor (79),
- einen Kriechgang-Schalter (170),
- einen Schalthebel-Sensor (80) zur Feststellung der Position des Schalthebels (92), und
- auf den Schalthebel-Sensor, den Kupplungspedal-Sensor und den Kriechgang-Schalter ansprechende Einrichtungen (80) zum Einschalten und Abschalten des Kriechgangmechanismus, wenn der Kriechgang-Schalter betätigt ist, wenn der Schalthebel einen niedrigen Bereich von Gängen auswählt und das Kupplungspedal niedergedrückt ist.

32. Getriebe nach Anspruch 12 und 26,
dadurch gekennzeichnet, daß die Servoschaltgang-Schalter (112, 114) sich auf dem zweiten Hebel (96) befinden, um selektiv die Betätigung der Servo-Schaltkupplungen (C1 - C4) zu steuern, wobei sich die Schalter (112, 114) an einer Position befinden, die es einem Fahrer ermöglicht, den Hebel (96) zu verschieben und die Schalter (112, 114) zu betätigen, ohne daß er eine Hand von dem Schalthebel (96) entfernt.

33. Getriebe nach einem der Ansprüche 8 bis 14 und 24 bis 32 zur Steuerung der Übertragung eines Drehmomentes von einer Antriebswelle (10) zu einer Abtriebswelle (11),
dadurch gekennzeichnet, daß das Getriebesystem folgende Teile einschließt:
- eine Vielzahl von elektrohydraulischen Servo-Schaltkupplungen (C1, C2, C3, C4), die zusammen mit einem Koppler (55) ein Getriebedrehzahlverhältnis zwischen den Antriebs- und Abtriebswellen auswählen, wobei zumindestens eine der Servo-Schaltkupplungen (C1, C2) zwischen dem Koppler und der Antriebswelle angeordnet ist, so daß der Koppler selektiv durch die genannte eine Servo-Schaltkupplung angetrieben wird,
- ein Ablaßventil (S3), über das Hydraulikflüssigkeit den Servo-Schaltkupplungen zugeführt oder von diesen abgelassen wird,
- ein Kupplungspedal (78), das in einer vollständig niedergedrückten Stellung ein synchronisiertes Schalten des Kopplers ermöglicht,
- Einrichtungen (79) zur Feststellung, ob das Kupplungspedal zumindestens bis zu einem Schwellenwertpunkt niedergedrückt wurde, wobei der Schwellenwertpunkt zwischen einer losgelassenen Stellung und der vollständig niedergedrückten Stellung liegt, und
- Einrichtungen (80), die auf die Feststellungseinrichtungen (79) ansprechen, um das Ablaßventil so zu steuern, daß die Hydraulikflüssigkeit von den Servo-Schaltkupplungen abgelassen wird, wenn das Kupplungspedal über den Schwellenwertpunkt hinaus niedergedrückt wird.

34. Getriebe nach Anspruch 33,
dadurch gekennzeichnet, daß der Schwellenwertpunkt von der vollständig niedergedrückten Stellung um ungefähr 12% der Strecke zwischen der losgelassenen Stellung und der vollständig niedergedrückten Stellung des Kupplungspedals (78) getrennt ist.

35. Getriebe nach Anspruch 33 oder 34,
dadurch gekennzeichnet, daß zumindestens eine zweite der Servo-Schaltkupplungen (C3, C4) zwischen dem Koppler (55) und der Abtriebswelle (11) liegt, um selektiv über den Koppler angetrieben zu werden.

36. Getriebe nach Anspruch 35,
dadurch gekennzeichnet, daß der Koppler (55) schaltbar ist, um die zweite Servo-Schaltkupplung (C3, C4) in einer Vorwärts- oder Rückwärtsrichtung anzutreiben.

37. Getriebe nach Anspruch 35 oder 36,
dadurch gekennzeichnet, daß der Koppler (65) schaltbar ist, um die zweite Servo-Schaltkupplung (C3, C4) mit einer ersten oder zweiten Drehzahl gegenüber der ersten Servo-Schaltkupplung (C1, C2) anzutreiben.

38. Getriebe nach einem der Ansprüche 33 bis 37,
dadurch gekennzeichnet, daß das Getriebe weiterhin einen weiteren schaltbaren Koppler (25) umfaßt, der zwischen den ersten und zweiten Servo-Schaltkupplungen (C1, C2; C3, C4) liegt, wobei der andere Koppler schaltbar ist, um die zweite Servo-Schaltkupplung (C3, C4) in einer Vorwärts- oder Rückwärtsrichtung anzutreiben.

## Revendications

1. Procédé de sélection d'une vitesse initiale au démarrage pour un système de boîte de vitesses possédant au moins un premier accouplement (65) réagissant au mouvement d'un premier levier de sélection de plage (92) entre une première et une seconde positions pour la sélection d'une première ou d'une seconde plage de vitesses, ladite seconde plage de vitesses étant supérieure à ladite première plage, et un microprocesseur (80) réagissant à la manoeuvre de commutateurs assistés (112, 114) pour le contrôle de plusieurs embrayages assistés électro-hydrauliquement (C1-C4), afin de sélectionner une vitesse parmi plusieurs vitesses assistées (34, 26, 37, 41) comprises dans la première ou la seconde plage sélectionnée, et caractérisé en ce que ce procédé comprend les étapes pour :
- la détection de la position dudit premier levier de sélection de plage (92);
- la détection d'une séquence de conditions de démarrage; et
- lorsque ladite séquence de conditions de démarrage existe, l'activation desdits embrayages assistés (C1-C4) pour la sélection de la vitesse la plus petite de boîte assistée, si le premier levier de sélection de plage (92) se trouve dans ladite seconde position et l'activation desdits embrayages assistés (C1-C4) pour la sélection de la vitesse la plus élevée de boîte assistée, si le premier levier de sélection de plage (92) se trouve dans ladite première position.

2. Procédé selon la revendication 1 caractérisé en ce que l'étape de détection d'une séquence de conditions de démarrage comprend l'étape de détection qu'un moteur entraînant la boîte de vitesses est en fonctionnement.

3. Procédé selon la revendication 2 caractérisé en ce que l'étape de détection d'une séquence de conditions de démarrage comprend, de plus, l'étape de détection de mouvement de la pédale d'embrayage réalisé d'une position enfoncée à une position relâchée.

4. Procédé selon la revendication 2 caractérisé en ce que l'étape de détection d'une séquence de conditions de démarrage comprend, de plus, l'étape de détection de mouvement d'un levier avant-arrière réalisé du point mort à une autre position.

5. Procédé selon l'une quelconque des revendications précédentes pour le contrôle d'une boîte de vitesses possédant un second accouplement (55) réagissant au mouvement d'un second levier de sélection de plage (96) entre une première et une seconde positions pour la sélection d'une plage de vitesses entre l'une quelconques desdites première et seconde plages, caractérisé en ce que le procédé comprend, de plus, les étapes pour:
- la détection de la position du second levier de sélection de plage (100); et
- lorsque ladite séquence de conditions de démarrage existe, l'activation desdits embrayages assistés (C1-C4) pour la sélection de la vitesse la plus élevée de boîte assistée, si ledit premier levier de sélection de plage (92) et ledit second levier de sélection de plage (96) sont tous deux situés dans leur dite première position et l'activation desdits embrayages assistés pour la sélection de la vitesse la plus petite de boîte assistée si lesdits leviers (92, 96) sont positionnés suivant une autre disposition.

6. Procédé selon la revendication 5 caractérisé en ce que lesdits premier et second leviers de sélection de plage (92, 96) possèdent tous deux une position de point mort et en ce que l'étape d'activation desdits embrayages assistés (C1-C4) est seulement effectuée si aucun des deux dits leviers de sélection de plage (92, 96) n'est situé sur sa position de point mort.

7. Procédé selon la revendication 4 et 6 ou 5 lorsqu'il est adjoint à la revendication 4, pour le contrôle d'une boîte de vitesses possédant un troisième accouplement (25) réagissant au mouvement du levier de commande avant/arrière (100) pour la sélection de l'entraînement en marche avant ou arrière d'un arbre de sortie (11) de ladite boîte de vitesses, caractérisé en ce que le procédé comprend, de plus, les étapes:
- d'entraînement dudit arbre de sortie (11) dans le sens de la marche avant à la vitesse sélectionnée de boîte assistée, lorsque le levier avant/arrière (100) sélectionne la marche avant; et
- d'entraînement dudit arbre de sortie (11) dans le sens de la marche arrière lorsque ledit levier avant/arrière (100) sélectionne la marche arrière.

8. Transmission possédant au moins un premier accouplement (65) réagissant au mouvement d'un premier levier de sélection de plage (92) entre une première position et une seconde pour la sélection d'une première ou d'une seconde plage de vitesses, ladite seconde plage de vitesses étant supérieure à ladite première plage, et un microprocesseur (80) réagissant à la manoeuvre de commutateurs assistés (112, 114) pour le contrôle d'une série de vitesses assistées électro-hydrauliquement (34, 26, 37, 41) comprises dans la première ou la seconde plage; et
caractérisée en ce que la boîte de vitesses comprend, de plus un appareil pour la sélection d'une vitesse initiale au démarrage, ledit appareil comprenant :
- un premier système (158, 160, 80) de détection de la position dudit premier levier de sélection de plage (92);
- un second système (79, 154, 156, 80) de détection d'une séquence de conditions de démarrage; et
- un troisième système (80) réagissant aux dits premier et second systèmes et en vigueur lorsque ladite séquence de conditions de démarrage existe dans le but de contrôler lesdits embrayages assistés (C1-C4), pour sélectionner la vitesse assistée la plus petite, si ledit premier levier de sélection de plage (92) se trouve dans ladite seconde position, et contrôlant lesdits embrayages assistés, pour sélectionner la vitesse assistée la plus élevée si le levier de sélection de plage se trouve dans ladite première position.

9. Transmission selon la revendication 8 caractérisée en ce que le second système (79, 154, 156, 80) comprend un système (80) pour la détection du fonctionnement d'un moteur entraînant la boîte de vitesses.

10. Transmission selon la revendication 8 ou 9 caractérisée en ce que le second système (79, 154, 156, 80) comprend de surcroît un système pour la détection d'un mouvement d'une pédale d'embrayage (78) d'une position enfoncée à une position relâchée.

11. Transmission selon la revendication 9 ou 10 caractérisée en ce que le second système (79, 154, 156, 80) comprend de surcroît un système pour la détection d'un mouvement d'un levier avant/arrière (100) du point mort à une autre position.

12. Transmission selon l'une quelconque des revendications 8 à 11, pour le contrôle d'une boîte de vitesses possédant un second accouplement (55) réagissant au mouvement d'un second levier de sélection de plage (96) entre une première et une seconde positions, pour la sélection d'une plage de vitesses comprise dans l'une des première ou seconde plages, caractérisée en ce que l'appareil comprend de surcroît:
- un quatrième système (162, 164) pour la détection de la position du second levier de sélection de plage (100); et
- ledit troisième système, réagissant audit premier (158, 160, 80), second (79, 154, 156, 80) et quatrième systèmes (162, 164), pour le contrôle desdits embrayages assistés (C1-C4) afin de sélectionner la vitesse assistée la plus élevée, si ledit premier levier de sélection de plage (92) et ledit second levier de sélection de plage (96) sont tous deux dans leur première position respective, et pour le contrôle desdits embrayages assistés afin de sélectionner la vitesse assistée la plus petite, lorsque lesdits leviers (92, 96) se trouvent dans des quelconques autres positions.

13. Transmission selon la revendication 12 caractérisée en ce que lesdits premier et second leviers (92, 96) possèdent tous deux une position de point mort et que lesdits embrayages assistés sont uniquement activés si aucun des leviers (92,96) ne se trouve dans sa position de point mort.

14. Transmission selon les revendications 11 à 13 pour le contrôle d'une boîte de vitesses possédant un troisième accouplement (25) réagissant au mouvement du levier de commande avant/arrière (100) pour la sélection de l'entraînement vers l'avant ou vers l'arrière d'un arbre de sortie (11) de ladite boîte de vitesses, caractérisée en ce que l'appareil comprend de surcroît:
- un système pour l'entraînement dudit arbre de sortie (11) dans le sens de la marche avant avec la vitesse sélectionnée de boîte assistée, lorsque ledit levier avant/arrière (100) est positionné sur marche avant; et
- un système pour l'entraînement dudit arbre de sortie (11) dans le sens de la marche arrière, lorsque ledit levier avant/arrière (100) est positionné sur marche arrière.

15. Procédé pour le contrôle d'un système de transmission possédant au moins un premier accouplement (65) réagissant au mouvement d'un premier levier de sélection de plage (92) entre une première et une seconde positions pour la sélection d'une première ou d'une seconde plage de vitesses, ladite seconde plage de vitesses étant supérieure à ladite première plage, et un microprocesseur (80) réagissant à l'activation des commutateurs assistés (112, 114) pour le contrôle de plusieurs embrayages assistés électro-hydrauliquement (C1, C4), de sorte qu'une des vitesses assistées (34, 36, 37, 41) soit sélectionnée parmi la première ou la seconde plage sélectionnée, et
caractérisé en ce que le procédé comprend les étapes de:
- détection d'une manoeuvre dudit premier levier de sélection de plage (92) d'une desdites positions vers l'autre; et
- l'activation desdits embrayages assistés (C1-C4) pour la sélection de la vitesse assistée la plus petite lorsque ledit premier levier de sélection de plage (92) est manoeuvré de ladite première à ladite seconde position, et l'activation desdits embrayages assistés (C1-C4) pour la sélection de la vitesse assistée la plus élevée lorsque ledit premier levier de sélection de plage (92) est manoeuvré de ladite seconde vers ladite première position.

16. Procédé selon la revendication 15 pour le contrôle d'une boite de vitesses possédant un second accouplement (55) relié à un second levier de sélection de plage (96) déplaçable entre une première et une seconde positions pour la sélection d'une plage inférieure ou supérieure de vitesses à l'intérieur de ladite première ou seconde plage, caractérisé en ce que le procédé comprend de surcroît des étapes de:
- détection d'une manoeuvre dudit second levier de sélection de plage (96) d'une de ses positions vers l'autre;
- production de signaux pour l'activation desdits embrayages assistés C1-C4) pour la sélection de la vitesse assistée la plus petite, lorsque ledit second levier de sélection de plage (96) est manoeuvré de sa première position vers sa seconde position, et de la vitesse assistée la plus élevée, lorsque ledit levier de sélection de plage (96) est manoeuvré de sa seconde vers sa première position; et,
- inhibition de la production de signaux en fonction du mouvement dudit second levier de sélection de plage, si les deux dits leviers de sélection de plage (92, 96) sont manoeuvrés pendant un seul enfoncement de la pédale d'embrayage (78), la pédale d'embrayage étant déplacée entre une position enfoncée et une position relâchée pour le contrôle du débit du fluide hydraulique desdits embrayages assistés (C1-C4).

17. Procédé selon la revendication 15 ou 16 et comprenant les étapes supplémentaires de:
- détection de la position du premier levier de sélection de plage (92);
- détection d'une séquence de conditions de démarrage; et,
- lorsque ladite séquence de conditions de démarrage existe, activation desdits embrayages assistés (C1-C4) pour la sélection de la vitesse assistée la plus petite si le levier de sélection de plage (92) se trouve dans ladite seconde position, et activation desdits embrayages assistés (C1-C4) pour la sélection de la vitesse assistée la plus élevée, si le levier de sélection de plage se trouve dans ladite première position.

18. Procédé selon la revendication 17 caractérisé en ce que l'étape de détection d'une séquence de conditions de démarrage comprend la détection qu'un moteur entraînant la boîte de vitesses est en fonctionnement et de détection d'une translation de la pédale d'embrayage (78) a été réalisée d'une position enfoncée à une position relâchée.

19. Procédé selon la revendication 17 caractérisé en ce que l'étape de détection d'une séquence de conditions de démarrage comprend la détection qu'un moteur entraînant la boîte de vitesses est en fonctionnement, et de détection d'une manoeuvre du levier avant/arrière (100) du point mort à une autre position.

20. Procédé selon la revendication 16, l'une quelconque des revendications 17 à 19 lorsqu'elles s'y rattachent, et comprenant de surcroît les étapes de:
- détection de la position du second levier de sélection de plage (100);
- lorsque ladite séquence de conditions de démarrage existe, activation desdits embrayages assistés (C1-C4) pour la sélection de la vitesse assistée la plus élevée si ledit premier levier de sélection de plage (92) et ledit second levier de sélection de plage (96) sont tous deux dans leur première position respective, et activation desdits embrayages assistés pour la sélection de la vitesse assistée la plus petite, lorsque lesdits leviers se trouvent dans des quelconques autres combinaisons de positions.

21. Procédé selon la revendication 19 caractérisé en ce que ledit premier levier de sélection de plage (92) et ledit second levier de sélection de plage (96) possèdent tous deux une position de point mort, et l'étape d'activation desdits embrayages assistés (C1-C4) est effectuée seulement si aucun desdits premier et second leviers de sélection de vitesses (92, 96) ne se trouve en position de point mort.

22. Procédé selon la revendication 16 ou les revendications 17 à 21, lorsqu'elles s'y rattachent, caractérisé en ce que le procédé comprend de surcroît l'étape d'empêchement qu'un changement d'une vitesse assistée à une autre, lorsque ledit second levier (96) est manoeuvré d'une de ses positions à une autre, mais est replacé dans sa position précédente avant que la pédale d'embrayage (78) ne soit relâchée.

23. Procédé selon l'une quelconque des revendication 1 à 7 et 15 à 22 où le système de transmission comprend un mécanisme de forte démultiplication commandé électriquement (70), caractérisé en ce que le procédé comprend les étapes supplémentaires de:
- contrôle du courant traversant la commande de forte démultiplication, si la commande est activée pour l'engagement de l'accouplement (15), afin de déterminer si ledit courant est compris entre ses première et seconde limites; et
- coupure dudit courant vers la commande si le courant contrôlé se trouve en dehors desdites limites.

24. Transmission possédant au moins un premier accouplement (65) réagissant au mouvement d'un premier levier de sélection de plage (92) entre une première et une seconde positions pour la sélection d'une première ou d'une seconde plage de vitesses, la seconde plage de vitesses étant supérieure à ladite première plage, un microprocesseur (80) réagissant à la commande de commutateurs assistés (112, 114) pour l'activation de plusieurs embrayages assistés électro-hydrauliquement (C1-C4), afin de sélectionner une vitesse de boîte assistée (34, 26, 37, 41) comprise dans la première ou la seconde plage sélectionnée; et
caractérisée en ce que la boîte de vitesses comprend de surcroît:
- un premier système (158, 160, 80) de détection d'une manoeuvre du premier levier de sélection de plage (92) d'une desdites positions à une autre; et,
- un second système (80) réagissant audit premier système pour la production de signaux afin d'activer lesdits embrayages assistés (C1-C4) pour la sélection de la vitesse assistée la plus petite, lorsque ledit premier levier de sélection de plage (92) est manoeuvré de ladite première à ladite seconde position, et de la vitesse assistée la plus élevée, lorsque ledit premier levier de sélection de plage (92) est manoeuvré de ladite seconde vers ladite première position.

25. Système selon la revendication 24 caractérisé en ce que lesdites plus petite et plus élevée vitesses assistées sont séparées par au moins une autre vitesse assistée.

26. Système selon les revendications 24 et 25 comprenant de surcroît un second accouplement (25) réagissant au mouvement d'un second levier de sélection de plage (96) entre une première et une seconde positions pour la sélection d'une plage inférieure et supérieure de vitesses dans chacune desdites première et seconde plages, caractérisé en ce que la boîte de vitesses comprend de surcroît:
- un troisième système (80) pour la détection de la position dudit second levier de sélection de plage (96);
- un quatrième système (162, 164) réagissant audit troisième système pour la détection d'une manoeuvre dudit second levier de sélection de plage (96) d'une de ses positions à une autre;
- un cinquième système (80) réagissant audit quatrième système pour la production de signaux afin d'activer lesdits embrayages assistés pour la sélection de la plus petite vitesse assistée lorsque ledit second levier de sélection de plage (96) est manoeuvré de sa seconde vers sa première position; et,
- un système (80) réagissant audit premier système pour l'inhibition dudit cinquième système si les deux dits leviers de sélection de plage (92, 96) sont manoeuvrés pendant un seul enfoncement de la pédale d'embrayage (78); la pédale d'embrayage (78) étant déplacée entre une position enfoncée et une position relâchée pour le contrôle du débit de fluide hydraulique vers lesdits embrayages assistés (C1-C4).

27. Système selon les revendications 24 à 26 et comprenant de surcroît un appareil de sélection d'une vitesse initiale lors du démarrage, caractérisé en ce que ledit appareil comprend:
- un premier système (158, 160, 80) de détection de la position du premier levier de sélection de plage (92);
- un second système (79, 154, 156, 80) de détection d'une séquence de conditions de démarrage; et,
- un troisième système (80) réagissant aux dits premier et second systèmes et entrant en fonction lorsque ladite séquence de conditions de démarrage existe, pour le contrôle desdits embrayages assistés (C1-C4), afin de sélectionner la vitesse assistée la plus petite, si le premier levier de sélection de plage (92) se trouve dans ladite seconde position, et pour le contrôle desdits embrayages assistés (C1-C4), afin de sélectionner la vitesse assistée la plus élevée, si le premier levier de sélection de plage (92) se trouve dans ladite première position.

28. Transmission selon la revendication 27 caractérisée en ce que le second système (79, 154, 156, 80) comprend un système (80) de détection du fonctionnement d'un moteur entraînant la boîte de vitesses, et un système de détection de translation d'une pédale d'embrayage (78) d'une position enfoncée vers une position relâchée.

29. Transmission selon la revendication 27 caractérisée en ce que le second système (79, 154, 156, 80) comprend un système (80) de détection du fonctionnement d'un moteur entraînant la boîte de vitesses, et d'un système de détection d'une manoeuvre d'un levier avant/arrière (100) du point mort vers une autre position.

30. Transmission selon la revendication 26 et selon l'une quelconque des revendications 27 à 29, lorsqu'elles s'y rapportent, caractérisée en ce que ledit appareil comprend de surcroît:
- un quatrième système (162, 164, 80) de détection de la position du second levier de sélection de plage (96);
- ledit troisième système réagissant aux dits premier, second et quatrième systèmes pour le contrôle des embrayages assistés (C1-C4), afin de sélectionner la vitesse assistée la plus élevée si ledit premier levier de sélection de plage (92) et ledit second levier de sélection de plage (96) se trouvent tous deux dans leur première position respective, et pour le contrôle desdits embrayages assistés afin de sélectionner la vitesse assistée la plus petite, si lesdits leviers (92, 96) se trouvent dans une quelconque autre position.

31. Transmission selon l'une quelconque des revendications 8 à 14 et 24 à 30 caractérisée en ce que la boîte de vitesse comprend de surcroît:
- un mécanisme de forte démultiplication (70), comprenant un accouplement (15) engageable pour réduire le rapport entre la vitesse de l'arbre de sortie et la vitesse de l'arbre d'entrée pour une vitesse de boite sélectionnée;
- une pédale d'embrayage (78) et un capteur de pédale d'embrayage (79);
- un commutateur de forte démultiplication (170);
- un capteur de levier de sélection (80) pour la détection de la position du levier de sélection (92); et,
- un système (80) réagissant au dit capteur de levier de sélection, au capteur de pédale d'embrayage et au commutateur de forte démultiplication, pour l'activation et la désactivation du mécanisme de forte démultiplication, lorsque le commutateur de forte démultiplication est actionné alors que le levier de sélection est positionné sur une plage inférieure de vitesse et que la pédale d'embrayage est enfoncée.

32. Transmission selon les revendications 12 et 26 caractérisée en ce que les commutateurs assistés (112, 114) sont situés sur le second levier (96) de contrôle sélectif de l'activation desdits embrayages assistés (C1-C4); les commutateurs (112, 114) étant situés à un emplacement qui permet à l'opérateur de manoeuvrer le levier (96) et d'actionner les commutateurs (112, 114) sans déplacer la main du levier de sélection (96).

33. Transmission selon l'une quelconque des revendications 8 à 14 et 24 à 32 pour le contrôle de la transmission du couple d'un arbre d'entrée (10) vers un arbre de sortie (11); caractérisée en ce que ledit système de transmission comprend:
- une série d'embrayages assistés électro-hydrauliquement (C1,C2,C3,C4) qui, par l'intermédiaire d'un accouplement (55), sélectionnent un rapport de vitesse entre lesdits arbres d'entrée et de sortie, avec au moins un desdits embrayages assistés (C1, C2) situés entre l'accouplement et l'arbre d'entrée, de telle sorte que ledit accouplement soit entraîné sélectivement via l'un desdits embrayages assistés;
- une vanne de décharge (S3) au travers de laquelle le fluide hydraulique agit sur lesdits embrayages assistés ou s'en échappe;
- une pédale d'embrayage (78), qui lors d'un enfoncement complet, permet un engagement synchronisé de l'accouplement;
- un système (79) de détection d'un enfoncement de la pédale d'embrayage au moins au-delà d'un point de seuil, le point de seuil étant situé entre une position relâchée et la position complètement enfoncée; et,
- un système (80) réagissant aux systèmes de détection (79) pour le contrôle de la vanne de décharge, afin de laisser s'échapper le fluide hydraulique des embrayages assistés lorsque la pédale d'embrayage est enfoncée au-delà du point de seuil.

34. Transmission selon la revendication 33, caractérisée en ce que le point de seuil est séparé de la position complètement enfoncée par environ 12% de la distance entre la position relâchée et la position complètement enfoncée de la pédale d'embrayage (78).

35. Transmission selon la revendication 33 ou 34, caractérisée en ce qu'au moins un second des embrayages assistés (C3, C4) est situé entre l'accouplement (55) et l'arbre de sortie (11), de telle manière qu'il soit entraîné sélectivement via l'accouplement.

36. Transmission selon la revendication 35 caractérisée en ce que l'accouplement (55) est engageable pour entraîner le second embrayage assisté (C3, C4) dans le sens de la marche avant ou de la marche arrière.

37. Transmission selon les revendications 35 ou 36, caractérisée en ce que l'accouplement (65) est engageable pour entraîner le second embrayage assisté (C3, C4) à une première ou une seconde vitesse en fonction du premier embrayage assisté (C1, C2).

38. Transmission selon l'une quelconque des revendications 33 à 37 caractérisée en ce que la boîte de vitesse comprend de surcroît un autre accouplement engageable (25) situé entre lesdits premier et second embrayages assistés (C1, C2; C3, C4), ledit autre accouplement étant engageable pour entraîner le second embrayage assisté (C3, C4) dans le sens de la marche avant ou de la marche arrière.
